# EUROPÄISCHE PATENTSCHRIFT

(11) **EP 3 788 385 B1**
(45) Veröffentlichungstag und Bekanntmachung des Hinweises auf die Patenterteilung: **12.10.2022**
(21) Anmeldenummer: 19727926.8
(22) Anmeldetag: 26.04.2019
(51) Int. Cl.: G01P 5/08, G01P 5/20, G01P 5/22, G01P 13/04, F03D 17/00, F03D 7/02

(54) **WINDKRAFTMASCHINE**
WIND TURBINE
ÉOLIENNE

(30) Priorität: 03.05.2018 DE 102018003608
(43) Veröffentlichungstag der Anmeldung: 10.03.2021
(73) Patentinhaber: Promecon Process Measurement Control GmbH, 39179 Barleben (DE)
(72) Erfinder: CONRADS, Hans Georg, 30625 Hannover (DE); MÄDE, Matthias, 39167 Eichenbarleben (DE)
(74) Vertreter: Fischer, Volker
(86) Internationale Anmeldenummer: PCT/DE2019/000114
(87) Internationale Veröffentlichungsnummer: WO 2019/210892

(56) Entgegenhaltungen:
- EP-A1- 1 288 494
- EP-B1- 0 970 308
- DE-A1- 19 651 611
- DE-A1-102012 014 260

## Beschreibung

Die Erfindung betrifft eine Windkraftmaschine insbesondere zur Gewinnung elektrischer Energie aus dem den Rotor der Windkraftmaschine anströmenden Wind.

Eine gattungsgemäße Windkraftmaschine weist einen im Wesentlichen lotrecht stehenden Turm, eine an der Spitze des Turmes angeordnete, um die Längsachse des Turmes gesteuert bzw. geregelt drehbare Gondel, einen um eine im Wesentlichen horizontal ausgerichtete Drehachse drehbaren Rotor mit zumindest zwei an einer Nabe angeordneten Rotorblättern, ein mit der Nabe in Wirkverbindung stehenden elektrischen Generator, zumindest eine Einrichtung zur Bestimmung der Geschwindigkeit und der Strömungsrichtung des die Windkraftmaschine anströmenden Windes und eine Steuer- bzw. Regeleinrichtung mindestens zur Steuerung bzw. Regelung der Ausrichtung des Rotors gegen den die Windkraftmaschine anströmenden Wind auf. Die Effektivität der Windkraftmaschine, d.h. ihr Wirkungsgrad, hängt in hohem Maße von der Ausrichtung des Rotors gegen den die Windkraftmaschine anströmenden Wind ab. Moderne Windkraftmaschinen verfügen außerdem über die Möglichkeit, die Ausrichtung der Drehachse des drehbaren Rotors gegenüber der Horizontalen gesteuert bzw. geregelt zu verändern, um so eine Ausrichtung des Rotors auch an von der horizontalen abweichenden Windströmungsrichtungen zu ermöglichen sowie die Stellung der Rotorblätter gesteuert bzw geregelt zu verändern und so den Betrag der aus dem anströmenden Wind gewinnbaren Energie durch eine Veränderung der Windlast der Rotorblätter entsprechend der Geschwindigkeit des anströmenden Windes zu verändern. Wesentlich für die Gewinnung elektrischer Energie aus dem die Windkraftmaschine anströmenden Wind sind eine möglichst exakte Kenntnis der Geschwindigkeit und der Strömungsrichtung des die Windkraftmaschine anströmenden Windes.

Weit verbreitet zur Bestimmung der Windgeschwindigkeit sind bei Windkraftmaschinen auf dem Dach der Gondel angeordnete Schalenanemometer. Zur Bestimmung der Windrichtung sind ebenfalls auf dem Dach der Gondel Windfahnen angeordnet. Die Anordnung der Mittel zur Bestimmung der Geschwindigkeit und der Strömungsrichtung des Windes auf dem Dach der Gondel ist jedoch problematisch und führt in der Regel nur zu ungenauen Ergebnissen, weil Geschwindigkeit und Strömungsrichtung des Windes hinter dem Rotor erfasst werden und durch die Drehung des Rotors beeinflusst sind.

Aus der EP 1 288 494 A1 ist ein vor dem Rotor einer Windkraftmaschine, d.h. an der Nabe, anordenbares Windvektorbestimmungsgerät bekannt, bei dem die Geschwindigkeit und die Strömungsrichtung des anströmenden Windes mittels mindestens zweier Pitotrohre bestimmt wird, deren Staudrucköffnungen unterschiedlich im Raum ausgerichtet sind. Dadurch wird es möglich, sowohl die Geschwindigkeit als auch die Strömungsrichtung des Windes zu bestimmen. Pitotrohre sind jedoch in hohem Maße störempfindlich gegen Verschmutzung und/oder Vereisung. Schutzmaßnahmen hiergegen sind möglich, jedoch aufwendig. Dies kann zu Ungenauigkeiten bei der Bestimmung der Geschwindigkeit und der Strömungsrichtung des anströmenden Windes führen.

Bekannt sind Windkraftmaschinen, die zur Bestimmung der Geschwindigkeit und/oder der Strömungsrichtung des anströmenden Windes Ultraschallwindmesser aufweisen. So wird beispielsweise in der DE 10 2015 003 069 A1 ein an einer Windkraftmaschine anordenbarer Ultraschallwindmesser zur Ermittlung wenigstens einer Eigenschaft des anströmenden Windes beschrieben, der wenigstens einen Sender zum Emittieren von Schallwellen und zumindest zwei Empfänger zum wenigstens teilweisen Aufnehmen der emittierten Schallwellen sowie eine Auswerteeinheit zur Bestimmung jeweils der Laufzeit der Schallwellen zwischen dem Sender und den zumindest zwei Empfängern und zur Ermittlung der Geschwindigkeit und/oder der Strömungsrichtung des anströmenden Windes daraus enthält. Der Nachteil von Ultraschallwindmessern besteht darin, dass sie stets einer Kalibrierung bedürfen und störempfindlich gegen Verschmutzung, Benetzung und Vereisung sind.

Aus der EP 0 970 308 B1 ist eine Windkraftmaschine mit einem als Laseranemometriesystem ausgebildeten Windgeschwindigkeitsmesssystem bekannt, bei dem ein Laserstrahl gegen den anströmenden Wind ausgesendet wird, der mit im anströmenden Wind mitgeführten Partikeln wechselwirkt, wobei diese Wechselwirkung erfasst und zur Erzeugung eines Geschwindigkeitssignales, das der Geschwindigkeit der Partikel entspricht, ausgewertet wird. Durch ein Aussenden in verschiedene Richtungen gegen den anströmenden Wind kann ein Geschwindigkeitsfeld des anströmenden Windes ermittelt werden. Nachteilig hierbei ist der hohe Aufwand des Laseranemometriesystems.

Aus der DE 196 51 611 A1 ist eine Einrichtung zur berührungslosen Messung einer Teilchenzustandsgröße eines elektrisch geladenen, Teilchen enthaltenden, in einem Rohr strömenden Mediums bekannt, bei der im strömenden Medium mindestens ein Sensorelement in Form einer flächenhaften Elektrode angeordnet ist, wobei durch die sich an der Elektrode vorbeibewegenden elektrisch geladenen Teilchen wechselnde Ladungsverschiebungen influenziert werden, die einen Signalwechselanteil im elektrischen Ausgangssignal an den Elektroden verursachen, der als Maß für die Teilchenkonzentration ausgewertet wird.

In der DE 10 2012 014 260 A1 wird eine Messeinrichtung zur Luftmengenmessung beschrieben, bei der in Strömungsrichtung des Luftstromes hintereinander zwei Sensoren angeordnet sind, in denen sich an den Sensoren vorbeibewegende, im Luftstrom geführte elektrisch geladene Teilchen oder elektrisch modifizierte Moleküle des Luftstromes elektrische Signale generieren, anhand derer durch Auswertung mittels einer Korrelationsmesseinrichtung die Strömungsgeschwindigkeit des Luftstromes bestimmt wird. Dabei werden die elektrisch geladenen Teilchen oder die elektrisch modifizierten Moleküle des Luftstromes mittels einer in Strömungsrichtung des Luftstromes vor den Sensoren angeordneten Hochspannungselektrode erzeugt.

Aufgabe der Erfindung ist die Bereitstellung einer Windkraftmaschine der gattungsgemäßen Art, mit der eine weitgehend störunempfindliche Ausrichtung des Rotors der Windkraftmaschine gegen den anströmenden Wind mit hoher Genauigkeit erreicht wird. Erfindungsgemäß wird diese Aufgabe durch eine Windkraftmaschine mit den Merkmalen des Patentanspruches 1 oder 2 gelöst. Die Ansprüche 3 bis 15 beschreiben vorteilhafte Ausgestaltungen der Erfindung.

Eine erfindungsgemäße Windkraftmaschine umfasst mindestens einen im Wesentlichen lotrecht stehenden Turm, eine an der Spitze des Turmes angeordnete, um die Längsachse des Turmes gesteuert bzw. geregelt drehbare Gondel mit einem um eine im Wesentlichen horizontal ausgerichtete Drehachse drehbaren Rotor mit zumindest zwei an einer Nabe angeordneten Rotorblättern, einen mit der Nabe in Wirkverbindung stehenden elektrischen Generator, mindestens eine Einrichtung zur Bestimmung der Strömungsrichtung und mindestens eine Einrichtung zur Bestimmung der Geschwindigkeit und der Strömungsrichtung eines die Windkraftmaschine anströmenden Windes und eine Steuer- bzw. Regeleinrichtung mindestens zur Steuerung bzw. Regelung der Ausrichtung des Rotors gegen den die Windkraftmaschine anströmenden Wind. Bei einer ersten Ausbildung der Erfindung weist mindestens eine Einrichtung zur Bestimmung der Geschwindigkeit und der Strömungsrichtung des die Windkraftmaschine anströmenden Windes mindestens vier an der Nabe so angeordnete linienförmige Empfangsantennen auf, dass der anströmende Wind an diesen Empfangsantennen vorbeiströmt. Dabei sind die Empfangsantennen so ausgebildet, dass von elektrisch beeinflussten, im anströmenden Wind mitgeführten Partikeln und Molekülen, die sich an den Empfangsantennen vorbeibewegen, durch elektrostatische Induktion in den Empfangsantennen elektrische Signale generiert werden. Jeweils zwei der Empfangsantennen bilden ein korrespondierendes Empfangsantennenpaar, in dem sie in einem vorbestimmten Abstand parallel zueinander und bezogen auf die Drehachse des Rotors hintereinander derart angeordnet sind, dass mindestens ein Teil der sich an der in Strömungsrichtung des anströmenden Windes ersten Empfangsantenne vorbeibewegenden Partikel und Moleküle des anströmenden Windes auch an der in Strömungsrichtung des anströmenden Windes zweiten Empfangsantenne vorbeibewegen. Die Empfangsantennen mindestens eines korrespondierenden Empfangsantennenpaares sind in einem Winkel α₁ mit 10° < α₁ < 80°, bevorzugt 15° < α₁ < 60°, zur Drehachse des Rotors oder zu einer Ebene, die von einer zwischen den Empfangantennenpaaren liegenden Geraden und der Drehachse des Rotors aufgespannt ist, liegt, und die Empfangsantennen mindestens eines weiteren korrespondierenden Empfangsantennenpaares in einem Winkel α₂ mit -10° > α₂ > -80°, bevorzugt -15° > α₂ > -60°, zur Drehachse des Rotors oder zu einer Ebene, die von einer zwischen den Empfangantennenpaaren liegenden Geraden und der Drehachse des Rotors aufgespannt ist, angeordnet. Die Einrichtung zur Bestimmung der Geschwindigkeit und der Strömungsrichtung des die Windkraftmaschine anströmenden Windes umfasst weiterhin mindestens eine Korrelationsmesseinrichtung, die so ausgebildet ist, dass mittels Korrelationsmessung die Zeit bestimmbar ist, die die im anströmenden Wind mitgeführten, elektrisch beeinflussten Partikel und Moleküle zur Überwindung des Abstandes zwischen den ein korrespondierendes Empfangsantennenpaar bildenden Empfangsantennen benötigen. Die Empfangsantennen eines ersten korrespondierenden Empfangsantennenpaares, die in einem Winkel α₁, und die Empfangsantennen eines zweiten korrespondierenden Empfangsantennenpaares, die in einem Winkel α₂ zur Drehachse des Rotors oder zu einer Ebene, die von einer zwischen den Empfangantennenpaaren liegenden Geraden und der Drehachse des Rotors aufgespannt ist, angeordnet sind, sind mit je einem Eingang einer Korrelationsmesseinrichtung verbunden, sodass jeweils mittels Korrelationsmessung die Zeiten bestimmbar sind, die die elektrisch beeinflussten Partikel und Moleküle zur Überwindung des Abstandes zwischen den korrespondierenden Empfangsantennen der Empfangsantennenpaare benötigen. Dabei kann eine Empfangsantenne oder können mehrere Empfangsantennen auch so angeordnet sein, dass sie besagte Ebene, die von einer zwischen den Empfangsantennenpaaren liegenden Geraden und der Drehachse des Rotors aufgespannt ist, durchstoßen. Schließlich umfasst mindestens eine Einrichtung zur Bestimmung der Geschwindigkeit und der Strömungsrichtung des die Windkraftmaschine anströmenden Windes eine Recheneinheit zur Errechnung der jeweiligen Geschwindigkeit, mit der sich die elektrisch beeinflussten Partikel und Moleküle zwischen den beiden Empfangsantennen eines Empfangsantennenpaares bewegen. Die Geschwindigkeit wird aus dem Abstand und der Zeit, die die im anströmenden Wind mitgeführten, elektrisch beeinflussten Partikel und Moleküle zur Überwindung des Abstandes zwischen den ein korrespondierendes Empfangsantennenpaar bildenden Empfangsantennen benötigen, errechnet. Dabei entspricht die jeweilige Geschwindigkeit der Partikel und Moleküle zwischen den Empfangsantennen eines Empfangantennenpaares eine Richtungskomponente der Geschwindigkeit des anströmenden Windes, die lotrecht zu den parallel angeordneten linienförmigen Empfangsantennen eines korrespondierenden Empfangsantennenpaares steht. Aus den Geschwindigkeiten der Richtungskomponenten des anströmenden Windes, die mittels der genannten Empfangsantennenpaare bestimmt wird, wird dann mittels Triangulation die Geschwindigkeit des anströmenden Windes und die Strömungsrichtung des anströmenden Windes bezogen auf die Drehachse des Rotors errechnet. Anhand der Strömungsrichtung des anströmenden Windes kann dann die Ausrichtung des Rotors gegen den die Windkraftmaschine anströmenden Wind erfolgen, wobei diese zweckmäßig so erfolgt, dass die durch die Rotorblätter aufgespannte Kreisebene möglichst im rechten Winkel zur Windrichtung steht.

Es kann zweckmäßig sein, dass die Windkraftmaschine weiterhin eine Einrichtung mindestens zur groben Bestimmung der Strömungsrichtung des die Windkraftmaschine anströmenden Windes aufweist. Diese weitere Einrichtung kann beispielsweise eine Windfahne sein, mittels derer die Strömungsrichtung des anströmenden Windes grob bestimmt und eine grobe Ausrichtung des Rotors gegen den die Windkraftmaschine anströmenden Wind erfolgt. Eine genaue Bestimmung der Strömungsrichtung des anströmenden Windes erfolgt dann mit der zuvor beschriebenen Einrichtung.

Sofern die Windkraftmaschine Mittel zur Veränderung der Stellung der Rotorblätter umfasst, kann die Geschwindigkeit des anströmenden Windes als Größe zur Steuerung bzw. Regelung der Stellung der Rotorblätter verwendet werden.

Bei einer anderen Ausbildung der Erfindung weist die Windkraftmaschine eine an der Spitze der Nabe in der Drehachse des Rotors liegend angeordnete, von der Nabe wegweisende Lanze auf. Bei dieser Ausbildung der Erfindung weist die Einrichtung zur Bestimmung der Geschwindigkeit und der Strömungsrichtung des die Windkraftmaschine anströmenden Windes mindestens vier so an der Lanze angeordnete linienförmige Empfangsantennen auf, dass der anströmende Wind an den Empfangsantennen vorbeiströmt. Die Empfangsantennen sind, wie bereits beschrieben, so ausgebildet, dass von elektrisch beeinflussten, im anströmenden Wind mitgeführten Partikeln und Molekülen, die sich an den Empfangsantennen vorbeibewegen, durch elektrostatische Induktion in den Empfangsantennen elektri.. sche Signale generiert werden. Auch bei dieser zweiten Ausbildung der Erfindung bilden jeweils zwei der Empfangsantennen ein korrespondierendes Empfangsantennenpaar, in dem sie in einem vorbestimmten Abstand parallel zueinander und bezogen auf die Drehachse des Rotors hintereinander derart angeordnet sind, dass mindestens ein Teil der sich an der in Strömungsrichtung des anströmenden Windes ersten Empfangsantenne vorbeibewegenden Partikel und Moleküle des anströmenden Windes auch an der in Strömungsrichtung des anströmenden Windes zweiten Empfangsantenne vorbeibewegen. Die Empfangsantennen mindestens eines korrespondierenden Empfangsantennenpaares sind in einem Winkel α₁ mit 10° < α₁, < 80°, bevorzugt 15° < α₁ < 60°, zur Drehachse des Rotors und die Empfangsantennen mindestens eines weiteren korrespondierenden Empfangsantennenpaares in einem Winkel α₂ mit -10° > α₂ > -80°, bevorzugt -15° > α₂ > -60°, zur Drehachse des Rotors angeordnet. Die Einrichtung zur Bestimmung der Geschwindigkeit und der Strömungsrichtung des die Windkraftmaschine anströmenden Windes umfasst weiterhin mindestens eine Korrelationsmesseinrichtung sowie eine Recheneinheit mit den bereits zur ersten Ausbildung der Erfindung beschriebenen Merkmalen.

Bevorzugt sind die ein korrespondierendes Empfangsannenpaar bildenenden Empfangantennen als parallel zueinander angeordnete Stäbe oder Drähte ausgebildet. Die Empfangsantennen weisen bevorzugt eine Länge zwischen 100 mm und 1000 mm auf und sind bevorzugt gleich lang ausgebildet. Der Abstand a zweier ein korrespondierendes Empfangsannenpaar bildenenden Empfangantennen ist bevorzugt zwischen 100 mm ≤ a ≤ 1000 mm. Die Empfangsantennen sind gegeneinander sowie gegenüber den elektrisch leitfähigen Teilen der Windkraftmaschine elektrisch isoliert angeordnet.

Im Falle der Ausbildung der Empfangsantennen als Stab oder Draht kann es vorteilhaft sein, eine oder mehrere Empfangantennen in Längsrichtung des Stabes oder Drahtes elektrisch und ggf. auch mechanisch segmentiert auszubilden, wobei die eine Empfangsantenne bildenden Stab- oder Drahtsegmente in Längsrichtung der Segmente fluchtend zueinander angeordnet sind. Die Segmente einer Empfangsantenne können elektrisch in Reihe geschaltet und die elektrisch segmentierte Empfangsantenne quasi als elektrische Einheit mit einem Eingang der Korrelationsmesseinrichtung verbunden sein. Es kann aber auch jedes Segment einer elektrisch segmentierten Empfangsantenne elektrisch mit einem separaten Eingang der Korrelationsmesseinrichtung verbunden sein.

Im Falle der Anordnung eines Spinners an der Nabe des Rotors kann eine Empfangsantenne durch mehrere elektrisch miteiander verbundene in einer Linie angeordnete aus dem Spinner ragende Stäbe oder Nadeln gebildet werden. Es versteht sich, dass im Falle der Anordnung eines Spinners an der Nabe des Rotors alle Empfangsantennen, wie vorstehend beschrieben, durch mehrere elektrisch miteinander verbundene in einer Linie angeordnete aus dem Spinner ragende Stäbe oder Nadeln gebildet werden können. Besteht der Spinner aus einem elektrisch leitfähigen Material, sind die Stäbe oder Nadeln gegenüber dem Spinner elektrisch isoliert angeordnet.

Bei einer besonders bevorzugten Ausbildung der Erfindung ist entgegen der Strömungsrichtung des die Windkraftmaschine anströmenden Windes in einer Entfernung von 100 mm bis 1500 mm, bevorzugt von ca. 200 mm, zur bezogen auf die Strömungsrichtung des die Windkraftmaschine anströmenden Windes ersten Empfangsantenne vor der ersten Empfangsantenne eine Elektrode angeordnet. Die Elektrode weist mindestens einen Elektrodenabschnitt mit einer Elektrodenkontur mit einem mittleren Radius rₘ mit 0,01 mm ≤ rₘ ≤ 1,2 mm auf. Die Elektrode kann dabei eine oder mehrere Spitzen oder Schneiden mit einer Kontur mit einem mittleren Radius rₘ mit 0,01 mm ≤ rₘ ≤ 1,2 mm aufweisen oder als Draht mit einem mittleren Radius rₘ mit 0,1 mm ≤ rₘ ≤ 1,2 mm ausgebildet sein. Sie ist so angeordnet, dass mindestens ein Teil des den Elektrodenabschnitt mit einer Elektrodenkontur mit einem mittleren Radius rₘ mit 0,01 mm ≤rₘ ≤ 1,2 mm umströmenden Windes nachfolgend an den Empfangantennen in einer Entfernung < 500 mm vorbeiströmt. Zu dieser Elektrode ist an der Windkraftmaschine mindestens eine elektrisch wirkende Gegenelektrode angeordnet oder ausgebildet. Die Windkraftmaschine umfasst bei dieser besonders bevorzugten Ausbildung der Erfindung eine Hochspannungsquelle mit einer Spannung U mit einem Betrag von 12 kV ≤ |U| ≤ 20 kV, bevorzugt 15 kV ≤ |U| ≤ 17 kV, mit deren unterschiedlichen Polen die Elektrode und die Gegenelektrode verbunden sind.

Die Hochspannungsquelle kann zur Erzeugung einer kontinuierlichen Spannung U oder zur Erzeugung von Spannungsimpulsen mit Maximalwerten der Spannung U zwischen 12 kV ≤ |U| ≤ 20 kV, bevorzugt 15 kV |U| ≤ 17 kV, und einer Impulsdauer von ca. 1 ms ausgebildet sein. Dabei können zufällige nichtperiodische Impulsfolgen oder auch periodisch wiederkehrende Impulsfolgen zweckmäßig sein. Die periodisch wiederkehrenden Impulsfolgen können beispielsweise eine Anzahl von n Impulsen einer Spannung U und einer Impulsdauer von ca. 1ms aufweisen, wobei 2 ≤ n ≤ 80, bevorzugt 6 ≤ n ≤ 30, ist. Die Impulsfolge von n Impulsen kann sich periodisch mit einer Periodendauer zwischen 0,2 s bis 3,0 s, bevorzugt zwischen 1,0 s bis 1,5 s, wiederholen.

Durch die Anordnung einer Elektrode entgegen der Strömungsrichtung des die Windkraftmaschine anströmenden Windes vor den Empfangsantennen und die Ausbildung einer Gegenelektrode wird mindestens ein Teil des anströmenden Windes der Wirkung einer elektrischen Spannung U ausgesetzt. Im anströmenden Wind geführte Luftmoleküle und/oder Partikel werden ionisiert. Für den Fall einer negativ geladenen Elektrode können auch durch Feldemission freie Elektronen emittiert und mit im anströmenden Wind geführten Luftmolekülen und/oder Partikeln elektrisch wechselwirken. Die dabei entstehenden positiven und negativen Ladungsträger werden von der Wirkung des zwischen der Elektrode und der Gegenelektrode aufgebauten elektrischen Feldes E̅ angetrieben. Die Ladungsträger, deren elektrische Ladung das gleiche Vorzeichen aufweist wie die Elektrode, bewegen sich von der Elektrode in Richtung Gegenelektrode. Die sich angetrieben vom elektrischen Feld E̅ bewegenden Ladungsträger treten in Wechselwirkung mit im anströmenden Wind geführten Molekülen, die dadurch elektrisch beeinflusst werden, sodass beim Vorbeiströmen der elektrisch beeinflussten Moleküle des anströmenden Windes an den Empfangsantennen durch elektrostatische Induktion in den Empfangsantennen elektrische Signale erzeugt werden, die dann, wie beschrieben einer Korrelationsmesseinrichtung zugeleitet werden.

Die Gegenelektrode kann speziell ausgebildet und angeordnet sein. Sie kann beispielsweise von einer elektrisch leitfähigen Platte gebildet werden, die in der Nähe der Empfangsantennen angeordnet ist. Sie kann aber auch durch ein elektrisch leitfähiges Bauteil der Windkraftmaschine, beispielsweise der Nabe des Rotors, oder, wenn vorhanden, durch die an der Nabe angeordnete Lanze oder, wenn vorhanden, durch den Spinner, wenn dieser aus elektrisch leitfähigem Material besteht, oder durch ein anderes elektrisch leitfähiges Bauteil der Windkraftmaschine gebildet werden. Wichtig für die Anordnung und Ausbildung der Elektrode und der Gegenelektrode ist, dass das elektrische Feld E̅ im Bereich der Empfangsantennen eine elektrischer Felstärke < 3 V/m aufweist. Elektrode und Gegenelektrode sind jeweils mit einem Pol der Hochspannungsquelle verbunden. Dabei ist bevorzugt die Elektrode als Kathode und die Gegenelektrode auf Massepotential geschaltet.

Bevorzugt ist die Elektrode als mindestens ein aus dem Spinner ragender Stab oder als mindestens eine aus dem Spinner ragende Nadel ausgebildet. Dabei weist die als Stab oder Nadel ausgebildete Elektrode mindestens einen Elektrodenabschnitt mit einer Elektrodenkontur mit einem mittleren Radius rₘ mit 0,01 mm ≤ rₘ ≤ 1,2 mm auf. Die als Stab oder Nadel ausgebildete Elektrode kann eine oder mehrere Spitzen oder Schneiden mit einer Kontur mit einem mittleren Radius rₘ mit 0,01 mm ≤ rₘ < 1,2 mm aufweisen.

Die Elektrode kann wahlweise einteilig oder mehrteilig ausgebildet sein.

Der besondere Vorteil der Anordnung einer eine Spannung führenden Elektrode im die Windkraftmaschine anströmenden Wind entgegen der Strömungsrichtung des anströmenden Windes vor den Empfangsantennen sowie die Anordnung bzw. Ausbildung einer Gegenelektrode besteht darin, dass im Falle einer nur geringen Beladung des anströmenden Windes mit elektrisch beeinflussten Partikeln oder Molekülen oder bei besonderen Wetterverhältnissen, wie Nebel, Regen, Schnee usw. im die Windkraftmaschine anströmenden Wind eine genügende Anzahl elektrisch beeinflusster Moleküle erzeugt wird, die beim Vorbeiströmen an den Empfangsantennen durch elektrostatische Induktion in den Empfangsantennen elektrische Signale erzeugen, die dann einer Korrelationsmesseinrichtung zugeleitet werden.

In dem Fall, dass die Empfangsantennen und die ggf. angeordnete Elektrode starr mit dem drehbaren Rotor verbunden sind, kann die Windkraftmaschine weiterhin eine Drehwinkelerfassungseinrichtung zur Erfassung des Drehwinkels des drehbaren Rotors aufweisen. Die Drehwinkelerfassungseinrichtung kann mit der Recheneinheit wirkverbunden sein. Der Drehwinkel des drehbaren Rotors kann in die Berechnung der Strömungsrichtung des anströmenden Windes einfließen. Anstelle der Drehwinkelerfassungseinrichtung zur Erfassung des Drehwinkels des drehbaren Rotors kann auch eine Einrichtung zur Erfassung mindestens eines frei wählbaren, sich mit dem Rotor um die Drehachse des Rotors drehenden Punktes vorgesehen sein. Auch diese Einrichtung zur Erfassung mindestens eines frei wählbaren, sich mit dem Rotor um die Drehachse des Rotors drehenden Punktes kann mit der Recheneinheit wirkverbunden sein. Die Ausgangssignale dieser Einrichtung zur Erfassung mindestens eines frei wählbaren, sich mit dem Rotor um die Drehachse des Rotors drehenden Punktes, die die periodische Wiederkehr mindestens eines frei wählbaren, sich um die Drehachse des Rotors drehenden Punktes signalisieren, können in die Berechnung der Strömungsrichtung des anströmenden Windes einfließen.

Im Falle der Anordnung der Empfangsantennen am Rotor oder Spinner der Windkraftmaschine können die Empfangsantennen als auf den Rotor oder Spinner elektrisch isoliert aufgeklebte Folienstreifen aus elektrisch leitfähigem Material ausgebildet sein.

Nachfolgend soll die Erfindung anhand zweier Ausführungsbeispiele näher erläutert werden. Die zugehörigen Zeichnungen zeigen in
- Fig. 1:: eine erste Ausbildung einer Windkraftmaschine mit einer an der Spitze der Nabe, in der Drehachse des Rotors liegend angeordneten Lanze, in
- Fig. 2:: als Detail die an der Spitze der Nabe, in der Drehachse des Rotors liegend angeordnete Lanze mit daran angeordneter Elektrode und Empfangsantennen, in
- Fig. 3:: eine zweite Ausbildung einer Windkraftmaschine mit auf einem Spinner angeordneten Empfangsantennen, in
- Fig. 4:: als Detail die auf dem Spinner angeordneten Empfangsantennen, in
- Fig. 5: eine andere Variante der zweiten Ausbildung einer Windkraftmaschine mit in der Wandung eines Spinners angeordneten Empfangsantennen, in
- Fig. 6: als Detail die in der Wandung eines Spinners angeordneten Empfangsantennen, in
- Fig. 7: einen Schnitt einer Wandung eines Spinners mit darin angeordneten Empfangsantennen und Gegenelektrode, in
- Fig. 8: einen Schnitt einer Wandung eines Spinners mit angeordneten Empfangsantennen und Gegenelektrode, in
- Fig. 9:: einen Ausschnitt eines Spinners mit einer Elektrode und auf dem Spinner angeordneten Empfangsantennen und in
- Fig. 10a - e:: Draufsichten auf eine am Spinner angeordnete Elektrode und auf dem Spinner angeordnete Empfangsantennen.

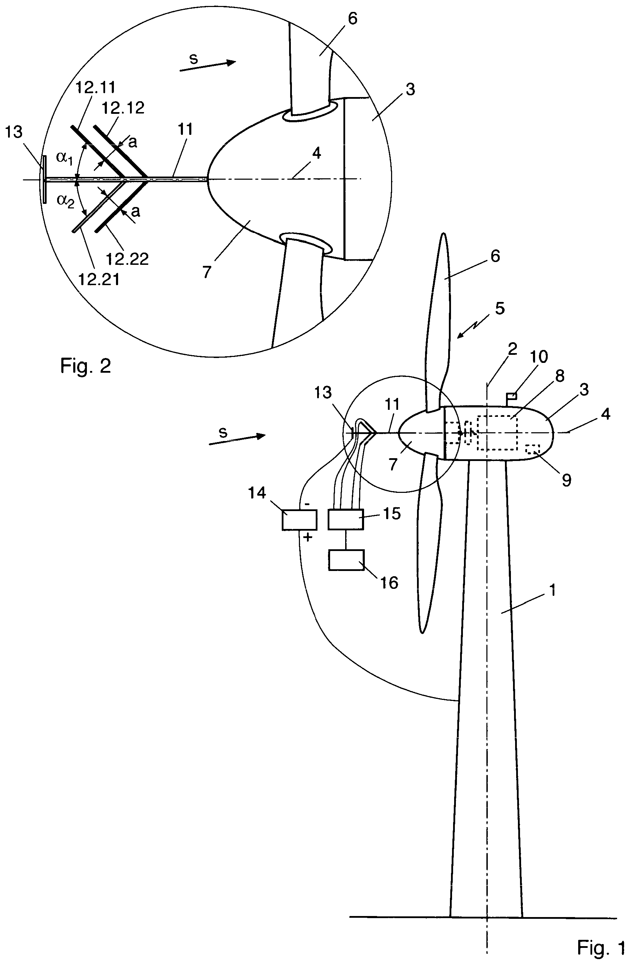

Fig. 1 zeigt eine erste Ausbildung einer Windkraftmaschine mit einem im Wesentlichen lotrecht stehenden Turm 1, einer an der Spitze des Turmes 1 angeordneten, um die Längsachse 2 des Turmes 1 gesteuert bzw: geregelt drehbaren Gondel 3. An der Gondel 3 ist ein um eine im Wesentlichen horizontal ausgerichtete Drehachse 4 drehbarer Rotor 5 mit drei an einer Nabe angeordneten Rotorblättern 6 angeordnet. Dabei trägt die Nabe als Verkleidung einen Spinner 7 und ist somit nicht sichtbar. Mit der Nabe in Wirkverbindung steht ein in der Gondel 3 angeordneter elektrischer Generator 8. Die Windkraftmaschine umfasst weiterhin eine Steuer- bzw. Regeleinrichtung 9 zur Steuerung bzw. Regelung der Ausrichtung des Rotors 5 gegen den die Winclkraftmaschine anströmenden Wind sowie eine als Windfahne 10 ausgebildete Einrichtung zur Bestimmung der Strömungsrichtung s des die Windkraftmaschine anströmenden Windes. Schließlich umfasst die Windkraftmaschine eine Einrichtung zur Bestimmung der Geschwindigkeit v und der Strömungsrichtung s des die Windkraftmaschine anströmenden Windes. Besagte Einrichtung zur Bestimmung der Geschwindigkeit v und der Strömungsrichtung s des die Windkraftmaschine anströmenden Windes besteht aus vier an einer Lanze 11 angeordneten Empfangsantennen 12.11,12.12,12.21 und 12.22, einer an der Spitze der Lanze 11 angeordneten Elektrode 13, eine Hochspannungsquelle 14, eine Korrelationsmesseinrichtung 15 und eine Recheneinrichtung 16.

Die Lanze 11 ist an der Nabe angeordnet und ragt, wie in Fig. 2 gezeigt, aus der Spitze des Spinners 7 heraus. Sie liegt in der Drehachse 4 des Rotors 5. An der Lanze 11 sind die vier Empfangsantennen 12.11, 12.12, 12.21 und 12.22 elektrisch isoliert gegeneinander sowie gegenüber der Lanze 11 angeordnet. Jeweils zwei Empfangsantennen 12.11, 12.12 bzw. 12.21, 12.22 sind mit einem Abstand a parallel zueinander angeordnet und bilden so ein erstes und ein zweites korrespondierendes Empfangsantennenpaar 12.11 - 12.12 und 12.21 - 12.22. Das erste Empfangsantennenpaar 12.11 - 12.12 ist in einem Winkel α₁ von 40° zur Drehachse 4 des Rotors 5, das zweite Empfangsantennenpaar 12.21 - 12.22 ist in einem Winkel α₂ von -40° zur Drehachse 4 des Rotors 5 an der Lanze 11 angeordnet. Die Beträge der Winkel α₁ und α₂ können, müssen aber nicht gleich groß sein. Jede Empfangsantenne 12.11, 12.12, 12.21 und 12.22 ist elektrisch mit je einem Eingang der Korrelationsmesseinrichtung 15 verbunden. Die Empfangsantennen 12.11, 12.12, 12.21 und 12.22 sind stabförmig ausgebildet und haben eine Länge von ca. 1000 mm. An der Spitze der Lanze 11 in einem Abstand von ca. 200 mm zu den in Strömungsrichtung s des anströmenden Windes ersten Empfangsantennen 12.11 und 12.21 ist eine Elektrode 13 angeordnet. Die beiden Enden der Elektrode 13 sind schneidenförmig mit einem Radius rₘ der Schneide von 0,8 mm ausgebildet. Die Elektrode 13 ist elektrisch isoliert gegenüber der Lanze 11 an dieser angeordnet und ist elektrisch mit dem negativen Pol der Hochspannungsquelle 14 verbunden. Der positive Pol der Hochspannungsquelle 14 ist elektrisch mit dem Turm 1 verbunden.

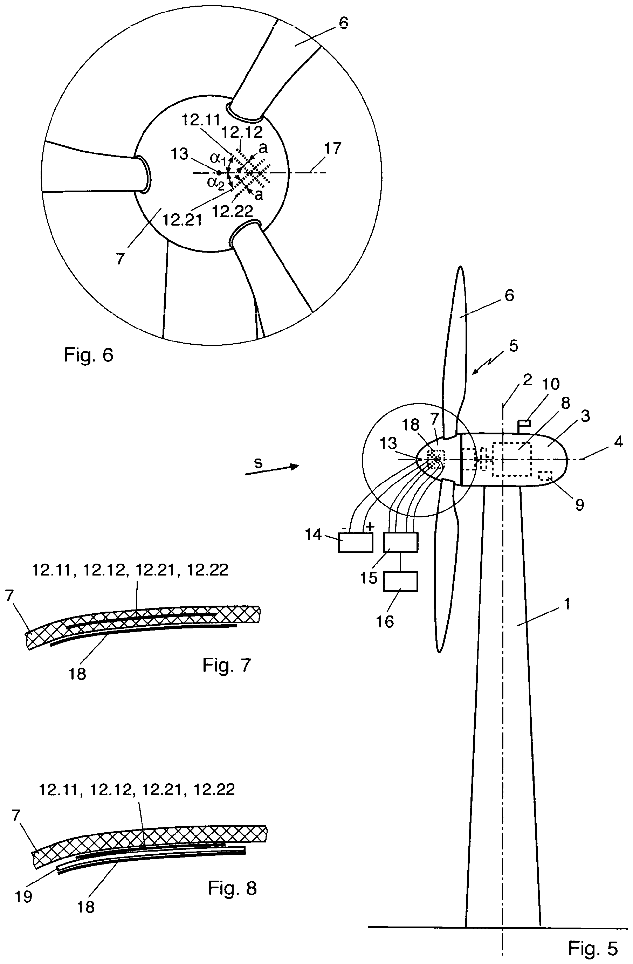

Zur Bestimmung der Geschwindigkeit v und der Strömungsrichtung s des anströmenden Windes wird wie folgt verfahren. Durch die Hochspannungsquelle 14 wird eine elektrische Spannung U von -17 kV bereitgestellt und liegt an der Elketrode 13 an. Mindestens ein Teil des anströmenden Windes wird der Wirkung dieser elektrischen Spannung U von -17 kV ausgesetzt. Im anströmenden Wind geführte Luftmoleküle und/oder Partikel können durch die Wirkung dieser Spannung direkt ionisiert werden. Darüber hinaus können durch Feldemission freie Elektronen aus der Elektrode 13 emittiert werden oder es können durch Feldionisation Elektronen aus im anströmenden Wind geführten Molekülen oder Partikeln gelöst werden und mit im anströmenden Wind geführten Luftmolekülen und/oder Partikeln elektrisch wechselwirken. Dabei entstehenden elektrische Ladungsträger, die wiederum in Wechselwirkung mit im anströmenden Wind geführten Molekülen treten und diese elektrisch beeinflussen. Beim Vorbeiströmen der elektrisch beeinflussten Moleküle des anströmenden Windes an den Empfangsantennen 12.11, 12.12, 12.21 und 12,22 werden durch elektrostatische Induktion in den Empfangsantennen 12.11 , 12.12, 12.21 und 12.22 elektrische Signale erzeugt. Aus den elektrischen Signalen der Empfangantennenpaare 12.11 - 12.12 und 12.21 - 12.22 wird mittels Korrelationsmessung die Zeit t bestimmt, die die elektrisch beeinflussten Moleküle des anströmenden Windes zur Überwindung des Abstandes a zwischen den Empfangsantennen 12.11 und 12.12 bzw. 12.21 und 12.22 eines korrespondierenden Empfangsantennenpaares 12.11 - 12.12 bzw. 12.21 - 12.22 benötigen. Aus dem Abstand a zwischen den Empfangsantennen 12.11 und 12.12 bzw. 12.21 und 12.22 eines korrespondierenden Empfangsantennenpaares 12.11 - 12.12 bzw. 12.21 - 12.22 und den Zeiten t₁ und t₂, die die elektrisch beeinflussten Moleküle des anströmenden Windes zur Überwindung dieses Abstandes a benötigen, werden mittels der Recheneinheit 16 zwei Geschwindigkeiten v₁, und v₂ berechnet, die jeweils einer lotrecht zu den parallel angeordneten stabförmigen Empfangsantennen 12.11 und 12.12 bzw. 12.21 und 12.22 eines korrespondierenden Empfangsantennenpaares 12.11 - 12.12 bzw 12.21 - 12.22 stehenden Richtungskomponente der Geschwindigkeit v des anströmenden Windes entspricht. Aus den Geschwindigkeiten v-, und v₂ der Richtungskomponenten der Geschwindigkeit v des anströmenden Windes wird dann mittels Triangulation die Geschwindigkeit v des anströmenden Windes und die Strömungsrichtung s des anströmenden Windes errechnet. In Fig. 6a sind die Geschwindigkeiten v₁ und v₂ der Richtungskomponenten der Geschwindigkeit v des anströmenden Windes veranschaulicht. Die Geschwindigkeit v und die Strömungsrichtung s des anströmenden Windes werden der Steuer- bzw. Regeleinrichtung 9 zugeleitet. Mittels der Steuer- bzw. Regeleinrichtung 9 wird dann die Ausrichtung des Rotors R gegen den die Windkraftmaschine anströmenden Wind gesteuert bzw. geregelt.

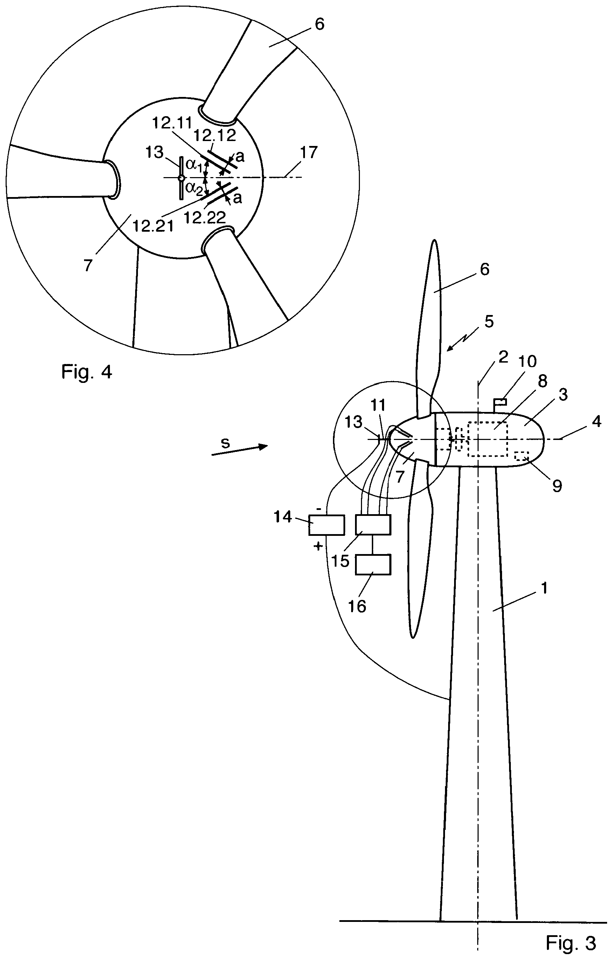

Die Fig. 3 und 4 zeigen eine zweite Ausbildung der erfindungsgemäßen Windkraftmaschine. Im Unterschied zu der in den Fig. 1 und 2 gezeigten ersten Ausbildung sind bei dieser zweiten Ausbildung die Empfangsantennen 12.11, 12.12, 12.21 und 12.22 nicht an einer aus der Spitze des Spinners 7 ragenden Lanze 11, sondern direkt auf dem Spinner 7 angeordnet. Auf dem Spinner 7 sind vier stabförmig ausgebildete Empfangsantennen 12.11, 12.12, 12.21 und 12.22 elektrisch isoliert gegeneinander sowie gegenüber dem Spinner 7 angeordnet. Jeweils zwei Empfangsantennen 12.11, 12.12 bzw. 12.21, 12.22 sind mit einem Abstand a parallel zueinander angeordnet und bilden so ein erstes und ein zweites korrespondierendes Empfangsantennenpaar 12.11 - 12.12 und 12.21 - 12.22. Das erste Empfangsantennenpaar 12.11 - 12.12 ist in einem Winkel α₁ von 40° zu einer Ebene, die von einer zwischen den Empfangantennenpaaren 12.11 - 12.12 und 12.21 - 12.22 liegenden Geraden 17 und der Drehachse 4 des Rotors 5 aufgespannt ist, das zweite Empfangsantennenpaar 12.21 - 12.22 ist in einem Winkel α₂ von -40° zu der vorgenannten Ebenene auf dem Spinner 7 angeordnet. Jede Empfangsantenne 12.11, 12.12, 12.21 und 12.22 ist elektrisch mit je einem Eingang der Korrelationsmesseinrichtung 15 verbunden. An einer aus der Spitze des Spinners 7 ragenden Lanze 11 ist in einem Abstand von ca. 200 mm zu den in Strömungsrichtung s des anströmenden Windes ersten Empfangsantennen 12.11 und 12.21 eine Elektrode 13 angeordnet. Die beinden Enden der Elektrode 13 sind schneidenförmig mit einem Radius rₘ der Schneide von 0,8 mm ausgebildet. Die Elektrode 13 ist elektrisch isoliert gegenüber der Lanze 11 an dieser angeordnet und ist elektrisch mit dem negativen Pol der Hochspannungsquelle 14 verbunden. Alle weiteren Merkmale der zweiten Ausbildung der Windkraftmaschine entsprechen denen, die bereits zu der ersten Ausbildung beschrieben wurden.

Die Fig. 5 und 6 zeigen eine andere Variante der zweite Ausbildung der erfindungsgemäßen Windkraftmaschine. Der Spinner 7 ist bei dieser Variante der zweiten Ausbildung der erfindungsgemäßen Windkraftmaschine aus glasfaserverstärktem Kunststoff, also einem dielektrisch wirkendem Material, gefertigt. Die Empfangsantennen 12.11 , 12.12, 12.21 und 12.22 sind innerhalb der Wandung des Spinners 7, also innerhalb des dielektrisch wirkenden Materials, angeordnet. Es sind vier stabförmig ausgebildete Empfangsantennen 12.11, 12.12, 12.21 und 12.22 elektrisch isoliert gegeneinander sowie gegenüber allen anderen Teilen der Windkraftmaschine angeordnet. Jeweils zwei Empfangsantennen 12,11, 12.12 bzw. 12.21, 12.22 sind mit einem Abstand a parallel zueinander angeordnet und bilden so ein erstes und ein zweites korrespondierendes Empfangsantennenpaar 12.11 - 12.12 und 12.21 - 12.22. Ein erstes Empfangsantennenpaar 12.11 - 12.12 ist in einem Winkel α₁ von 60° zu einer Ebene, die von einer zwischen den Empfangantennenpaaren 12.11 - 12.12 und 12.21 - 12.22 liegenden Geraden 17 und der Drehachse 4 des Rotors 5 aufgespannt ist, ein zweites Empfangsantennenpaar 12.21 - 12.22 ist in einem Winkel α₂ von -60° zu der vorgenannten Ebenene angeordnet. Die Empfangsantennen 12.11, 12.12 des ersten Empfangsantennenpaares 12.11 - 12.12 kreuzen die Empfangsantennen 12.21 , 12.22 des zweiten Empfangsantennenpaares 12.21 - 12.22. Jede Empfangsantenne 12.11,12.12,12.21 und 12.22 ist elektrisch mit je einem Eingang der Korrelationsmesseinrichtung 15 verbunden, In einem Abstand von ca. 200 mm zu den in Strömungsrichtung s des anströmenden Windes ersten Empfangsantennen 12.11 und 12.21 ist eine aus dem Spinner 7 ragende Elektrode 13 angeordnet. Die Elektrode 13 ist stabförmig ausgebildet und ragt ca. 10 cm aus der Spinnerhaut heraus. An dem aus dem Spinner 7 herausragenden Ende weist die Elektrode 13 eine Spitze mit einem Radius rₘ von 0,8 mm auf. Die Elektrode 13 ist elektrisch isoliert angeordnet und elektrisch mit dem negativen Pol der Hochspannungsquelle 14 verbunden. An der inneren Seite der Wandung des Spinners 7 ist eine als Platte ausgebildete Gegenelektrode 18 angeordnet. Sie ist so ausgebildet und angeordnet, dass sie den Bereich der Wandung des Spinners 7, in dem die Empfangsantennen 12.11, 12.12, 12.21 und 12.22 angeordnet sind, überdeckt. Die Gegenelektrode 18 ist elektrisch isoliert gegenüber den Empfangsantennen 12.11, 12.12, 12.21 und 12.22 angeordnet und elektrisch mit dem positiven Pol der Hochspannungsquelle 14 verbunden. Alle weiteren Merkmale der in Fig. 5 und 6 gezeigten anderen Variante der zweiten Ausbildung der Windkraftmaschine entsprechen denen, die bereits zu der ersten Ausbildung beschrieben wurden.

Fig. 7 zeigt einen Schnitt durch die Wandung eines Spinners 7 mit innerhalb der Wandung angeordneten Empfangsantennen 12.11, 12.12, 12.21 und 12.22 und an der inneren Seite der Wandung des Spinners 7 angeordneter Gegenelektrode 18.

Fig. 8 zeigt einen Schnitt durch die Wandung eines Spinners 7 mit an der inneren Seite der Wandung des Spinners 7 angeordneten Empfangsantennen 12.11, 12.12, 12.21 und 12.22. Ebenfalls an der inneren Seite der Wandung des Spinners 7 ist, durch eine elektrische Isolation 19 von den Empfangsantennen 12.11, 12.12, 12.21 und 12.22 getrennt, die Gegenelektrode 18 angeordnet.

Die Fig. 7 und 8 zeigen nur beispielhaft mögliche Anordnungen von Empfangsantennen 12.11 , 12.12, 12.21 und 12.22 und Gegenelektrode 18. Weitere andere Anordnungen von Empfangsantennen 12.11,12.12, 12.21 und 12.22 und Gegenelektrode 18 an bzw. innerhalb der Wandung eines Spinners 7 sind möglich und können technisch vorteilhaft sein.

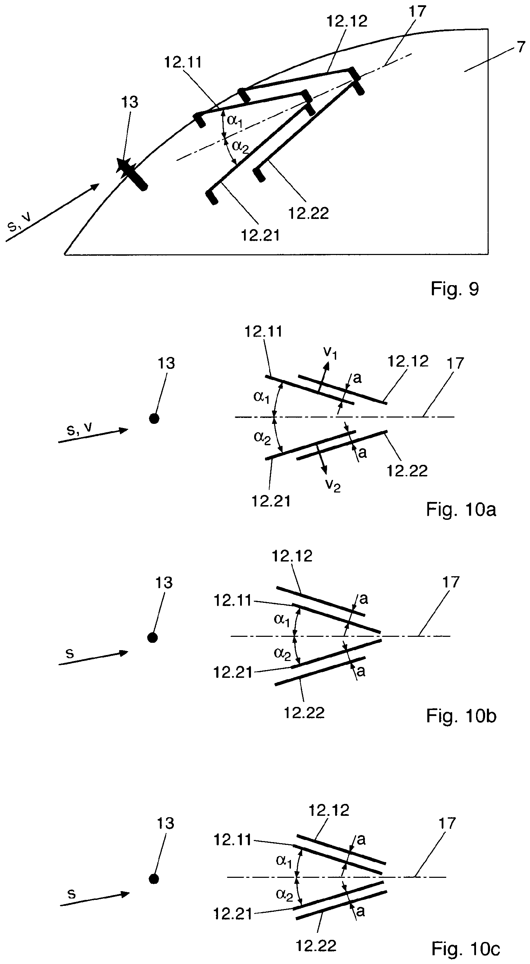

Fig. 9 zeigt einen Ausschnitt der Oberfläche eines Spinners 7. Sie veranschaulicht die Anordnung von vier stabförmig ausgebildeten Empfangsantennen 12.11, 12.12, 12.21 und 12.22 auf dem Spinner 7. Die Empfangsantennen 12.11, 12.12, 12.21 und 12.22 sind elektrisch isoliert gegeneinander sowie gegenüber dem Spinner 7 auf diesem angeordnet. Jeweils zwei Empfangsantennen 12.11, 12.12 bzw. 12.21, 12.22 sind mit einem Abstand a parallel zueinander angeordnet und bilden so ein erstes und ein zweites korrespondierendes Empfangsantennenpaar 12.11 - 12.12 und 12,21 - 12.22. Das erste Empfangsantennenpaar 12.11 - 12.12 ist in einem Winkel α₁ von 30° zu einer Ebene, die von einer zwischen den Empfangsantennenpaaren 12.11 - 12.12 und 12.21 - 12.22 liegenden Geraden 17 und der Drehachse 4 des Rotors 5 aufgespannt ist, angeordnet. Das zweite Empfangsantennenpaar 12.21 - 12.22 ist in einem Winkel α₂ von -30° zu vorgenannter Ebene auf dem Spinner 7 angeordnet. Jede Empfangsantenne 12.11 , 12.12, 12.21 und 12.22 ist elektrisch mit je einem Eingang der Korrelationsmesseinrichtung 15 verbunden. In Strömungsrichtung s des anströmenden Windes ist in einem Abstand von ca. 200 mm zu den in Strömungsrichtung s des anströmenden Windes ersten Empfangsantennen 12.11 und 12.21 eine Elektrode 13 auf dem Spinner angeordnet. Die Elektrode 13 ragt aus der Spinneroberfläche heraus. Sie weist mehrere Spitzen mit einern Radius rₘ von 0,8 mm auf. Die Elektrode 13 ist elektrisch isoliert gegenüber dem Spinner 7 angeordnet und elektrisch mit dem negativen Pol der Hochspannungsquelle 14 verbunden.

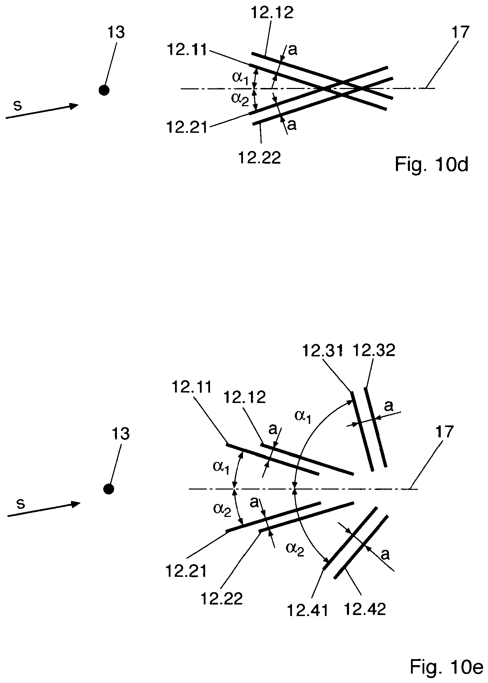

In den Fig. 10a bis d sind jeweils als Draufsicht auf die Oberfläche des Spinners 7 weitere Anordnungen von Empfangsantennen 12.11, 12.12,12.21 und 12.22 auf dem Spinner 7 dargestellt. Dabei zeigt die Fig. 10a eine Draufsicht auf die bereits in Fig. 9 dargestellte Anordnung. In den in den Fig. 10a und b dargestellten Anordnungen sind die ein Empfangsantennenpaar 12.11 - 12.12 bzw. 12.21 - 12.22 bildenden Empfangsantennen 12.11,12.12,12.21 und 12.22 in Längsrichtung der Empfangsantennen 12.11 ,12.12,12.21 und 12.22 gegeneinander verschoben. Dies kann zur Erzielung verbesserter elektrischer Signale an den Empfangsantennen 12.11, 12.12, 12.21 und 12.22 zweckmäßig sein. Fig. 10c zeigt eine Anordnung der Empfangsantennen 12.11, 12.12, 12.21 und 12.22 bei der die ein Empfangsantennenpaar 12.11 - 12.12 bzw. 12.21 - 12.22 bildenden Empfangsantennen 12.11, 12,12, 12.21 und 12.22 gleich lang und in Längsrichtung der Empfangsantennen 12.11, 12.12, 12.21 und 12.22 nicht gegeneinander verschoben sind. Fig. 10d zeigt eine Anordnung der Empfangsantennen 12.11, 12.12, 12.21 und 12.22 bei der die Empfangsantennen 12.11, 12.12des ersten Empfangsantennenpaares 12.11 - 12.12 die Empfangsantennen 12.21, 12.22 des zweiten Empfangsantennenpaares 12.21 - 12.22 kreuzen. Alle Empfangsantennen 12.11, 12.12, 12.21 und 12.22 sind auch bei der in Fig. 10d gezeigten Anordnung gegeneinander elektrisch isoliert angeordnet. In Strömungsrichtung s des anströmenden Windes ist in einem Abstand von ca. 200 mm zu den in Strömungsrichtung s des anströmenden Windes ersten Empfangsantennen 12.11 und 12.21 eine Elektrode 13 auf dem Spinner angeordnet.

Fig. 10e zeigt die Draufsicht auf die Oberfläche des Spinners 7, wobei auf dem Spinner insgesamt acht Empfangsantennen 12.11, 12.12, 12.21, 12.22, 12.31, 12.32 und 12.41, 12.42 angeordnet sind. Jeweils zwei parallel zueinander angeordnete Empfangsantennen 12.11, 12.12, 12.21, 12.22, 12.31, 12.32und 12.41, 12.42 bilden ein Empfangsantennenpaar 12.11- 12.12, 12.21 - 12.22, 12.31 - 12.32 und 12.41 - 12.42. Die Empfangsantennenpaare 12.11- 12.12 und 12.31 - 12.32 sind in einem Winkel α₁ zu einer Ebene, die von einer zwischen den Empfangsantennenpaaren 12.11 - 12.12, 12.31 - 12.32 und 12.21 - 12.22, 12.41 - 12.22 liegenden Geraden 17 und der Drehachse 4 des Rotors 5 aufgespannt ist, angeordnet. Die Empfangsantennenpaare 12.21 - 12.22 und 12.41 - 12.42 sind in einem Winkel α₂ zu dieser Ebene angeordnet. Dabei beträgt der Winkel α₁, in dem das Empfangsantennenpaar 12.11 - 12.12 zu dieser Ebene angeordnet ist, 30°. Das Empfangsantennenpaar 12.31 - 12.32 ist in einem Winkel α₁ von 75° zu dieser Ebene angeordnet. Der Winkel α₂, in dem das Empfangsantennenpaar 12.12 - 12.22 zu dieser Ebene angeordnet ist, beträgt -30°. Das Empfangsantennenpaar 12.41 - 12.42 ist in einem Winkel α₂ von -60° zu dieser Ebene angeordnet. Zur Bestimmung der Strömungsrichtung s und der Geschwindigkeit v des anströmenden Windes werden je ein Empfangsantennenpaar 12.11 - 12.12 oder 12.31 - 12.32, das in einem Winkel α₁ zu der genannten Ebene angeordnet ist und ein Empfangsantennenpaar 12.21 -12.22 oder 12.41 -12.42, das in einem Winkel α₁ zu der genannten Ebene angeordnet ist, mit den Eingängen der Korrelationsmesseinrichtung 15 elektrisch verbunden. Selbstverständlich ist es denkbar und möglich, parallel mehrere Korrelationsmesseinrichtungen 15 zu betreiben und entsprechende Empfangsantennenpaare 12.11 - 12.12 oder 12.31 - 12.32 bzw. 12.21 - 12.22 oder 12.41 - 12.42 mit den Eingängen einer Korrelationsmesseinrichtung 15 zu verbinden. Für die in Fig. 10e dargestellte Anordnung wäre es denkbar, die Empfangsantennenpaare 12.11 - 12.12 und 12.21 - 12.22, 12.11 - 12.12 und 12.41 - 12.42, 12.31 - 12.32 und 12.21 - 12.22 sowie 12.31 - 12.32 und 12.41 - 12.42 jeweils elektrisch mit einer Korrelationsmesseinrichtung zu verbinden und so mit vier Kombinationen von elektrischen Signalen, die an den Empfangsantennen generiert werden, die Strömungsrichtung s und die Geschwindigkeit v des anströmenden Windes zu ermitteln. Eine Verbesserung der Genauigkeit der Bestimmung der Strömungsrichtung s und der Geschwindigkeit v des anströmenden Windes und daraus folgend der Ausrichtung des Rotors 5 gegen den die Windkraftmaschine anströmenden Wind kann damit erreicht werden.

### Liste der verwendeten Bezugszeichen

- 1 -: Turm
- 2 -: Längsachse des Turmes
- 3 -: Gondel
- 4 -: Drehachse des Rotors
- 5 -: Rotor
- 6 -: Rotorblätter
- 7 -: Spinner
- 8 -: elektrischer Generator
- 9 -: Steuer- bzw. Regeleinrichtung
- 10 -: Windfahne
- 11 -: Lanze
- 12 -: Empfangsantennen
- 13 -: Elektrode
- 14 -: Hochspannungsquelle
- 15 -: Korrelationsmesseinrichtung
- 16 -: Recheneinrichtung
- 17 -: Gerade
- 18 -: Gegenelektrode
- 19 -: elektrische Isolation
- a -: Abstand zwischen den korrespondierenden Empfangsantennen eines Empfangsantennenpaares
- s -: Strömunsrichtung des anströmenden Windes
- t, t_{1,} t₂ -: Zeit
- v -: Geschwindigkeit des anströmenden Windes
- v₁, v₂ -: Richtungskomponenten der Geschwindigkeit v des anströmenden Windes
- α₁, α₂ -: Winkel

## Patentansprüche

1. Windkraftmaschine mit einem im Wesentlichen lotrecht stehenden Turm (1), einer an der Spitze des Turmes (1) angeordneten, um die Längsachse (2) des Turmes (1) gesteuert bzw. geregelt drehbaren, Gondel (3), mit einem um eine im Wesentlichen horizontal ausgerichtete Drehachse (4) drehbaren Rotor (5) mit zumindest zwei an einer Nabe angeordneten Rotorblättern (6), einem mit der Nabe in Wirkverbindung stehenden elektrischen Generator (8), mindestens eine Einrichtung (10) zur Bestimmung der Strömungsrichtung (s) und mindestens eine Einrichtung zur Bestimmung der Geschwindigkeit (v) und der Strömungsrichtung (s) eines die Windkraftmaschine anströmenden Windes und eine Steuer- bzw. Regeleinrichtung (9) mindestens zur Steuerung bzw. Regelung der Ausrichtung des Rotors (5) gegen den die Windkraftmaschine anströmenden Wind,
**dadurch gekennzeichnet, dass**
die mindestens eine Einrichtung zur Bestimmung der Geschwindigkeit (v) und der Strömungsrichtung (s) des die Windkraftmaschine anströmenden Windes
• mindestens vier bis N an der Nabe so angeordnete, geradlinige Empfangsantennen (12.11, 12.12, 12.21, 12.22, ... 12.N1, 12.N2), wobei N eine positive ganze Zahl ist, aufweist, dass der anströmende Wind an den Empfangsantennen (12.11, 12.12, 12.21, 12.22, ... 12.N1, 12.N2) vorbeiströmt, und dass die Empfangsantennen (12.11,12.12, 12.21, 12.22, ... 12.N1, 12.N2) so ausgebildet sind, dass von elektrisch beeinflussten, im anströmenden Wind mitgeführten Partikeln und Molekülen, die sich an den Empfangsantennen (12.11, 12.12, 12.21, 12.22, ... 12.N1, 12.N2) vorbeibewegen, durch elektrostatische Induktion in den Empfangsantennen (12.11, 12.12, 12.21, 12.22, ... 12.N1, 12.N2) elektrische Signale generiert werden, wobei jeweils zwei der Empfangsantennen (12.11, 12.12, 12.21, 12.22 ... 12.N1, 12.N2) ein korrespondierendes Empfangsantennenpaar ((12.11 - 12.12), (12.21 - 12.22) ... (12.N1 - 12.N2))bilden, indem die Empfangsantennen (12.11, 12.12, 12.21, 12.22 ... 12.N1, 12.N2) des jeweiligen korrespondierenden Empfangsantennenpaares((12.11 - 12.12), (12.21 - 12.22) ... (12.N1 -12.N2)) in einem vorbestimmten Abstand (a) parallel zueinander und bezogen auf die Drehachse (4) des Rotors (5) hintereinander derart angeordnet sind, dass mindestens ein Teil der sich an der in Strömungsrichtung (s) des anströmenden Windes ersten Empfangsantenne (12.11, 12.21, ... 12.N1) des jeweiligen korrespondierenden Empfangsantennenpaares ((12.11 - 12.12), (12.21 - 12.22) ... (12.N1 - 12.N2))vorbeibewegenden Partikel und Moleküle des anströmenden Windes auch an der in Strömungsrichtung (s) des anströmenden Windes zweiten Empfangsantenne (12.12,12.22, ... 12.N2) des korrespondierenden Empfangsantennenpaares ((12,11 - 12.12), (12.21 - 12.22) ... (12.N1 - 12.N2)) vorbeibewegen, wenn der Rotor (5) gegen den die Windkraftmaschine anströmenden Wind ausgerichtet ist, und die Empfangsantennen (12.11, 12.12, ... 12.N1, 12.N2) mindestens eines der korrespondierenden Empfangsantennenpaare ((12.11 - 12.12), ... (12.N1 - 12.N2)) in einem Winkel α₁ mit 10° < α₁ < 80°, bevorzugt 15° < α₁ < 60°, zur Drehachse (4) des Rotors (5) oder zu einer Ebene, die von einer zwischen den Empfangantennenpaaren ((12.11 - 12.12), (12.21 - 12.22) ... (12.N1 - 12.N2)) liegenden Geraden (17) und der Drehachse (4) des Rotors (5) aufgespannt ist, und die Empfangsantennen (12.21 , 12.22, ... 12.N1, 12.N2) mindestens eines der anderen korrespondierenden Empfangsantennenpaare ((12,21 - 12.22), ... (12.N1 - 12.N2)) in einem Winkel α₂ mit -10° > α₂ > -80°, bevorzugt -15° > α₂ > -60°, zur Drehachse (4) des Rotors (5) oder zu der Ebene, die von der zwischen den Empfangantennenpaaren ((12.11 -12.12), (12.21 -12.22) ... (12.N1 -12.N2)) liegenden Geraden (17) und der Drehachse (4) des Rotors (5) aufgespannt ist, angeordnet sind,
• mindestens eine Korrelationsmesseinrichtung (15) aufweist, die so ausgebildet ist, dass mittels Korrelationsmessung die Zeit (t) bestimmbar ist, die die im anströmenden Wind mitgeführten, elektrisch beeinflussten Partikel und Moleküle zur Überwindung des Abstandes (a) zwischen den das jeweilige korrespondierende Empfangsantennenpaar ((12.11 - 12.12), (12.21 - 12.22) .. (12.N1 - 12.N2))bildenden Empfangsantennen (12.11, 12.12, 12.21,12.22 ... 12.N1, 12.N2) benötigen, wobei die Empfangsantennen (12.11, 12.12 ... 12.N1, 12.N2) eines ersten der korrespondierenden Empfangsantennenpaare ((12.11 - 12.12) ... (12.N1 - 12.N2)), die in dem Winkel α₁, und die Empfangsantennen (12.21 , 12.22 ... 12.(N+1)1, 12.(N+1)2) eines zweiten der korrespondierenden Empfangsantennenpaare ((12.21 - 12.22) ... (12.(N+1)1 - 12.(N+1)2)), die in dem Winkel α₂ zur Drehachse (4) des Rotors (5) oder zu der Ebene, die von der zwischen den Empfangantennenpaaren ((12.11 - 12.12), (12.21 - 12.22) ... (12.N1 - 12.N2))liegenden Geraden (17) und der Drehachse (4) des Rotors (5) aufgespannt ist, angeordnet sind, mit je einem Eingang der Korrelationsmesseinrichtung (15) verbunden sind
• und einer Recheneinheit (16) zur Errechnung einer jeweiligen Geschwindigkeit (v₁ ... vₙ) aus dem Abstand (a) und der Zeit (t), die die im anströmenden Wind mitgeführten, elektrisch beeinflussten Partikel und Moleküle zur Überwindung des Abstandes (a) zwischen den das jeweilige korrespondierende Empfangsantennenpaar ((12.11 - 12.12), (12.21 - 12.22) ... (12.N1 - 12.N2)) bildenden Empfangsantennen (12.11, 12.12, 12.21, 12.22 ... 12.N1, 12.N2) benötigen, wobei die jeweilige Geschwindigkeit (v₁ ... vₙ) eine Richtungskomponente der Geschwindigkeit (v) des anströmenden Windes ist, die lotrecht zu den parallel angeordneten linienförmigen Empfangsantennen (12.11 , 12.12, 12.21, 12.22 ... 12.N1, 12.N2) eines der korrespondierenden Empfangsantennenpaare ((12.11 - 12.12), (12.21 - 12.22) ... (12.N1 - 12.N2))steht und aus den Geschwindigkeiten (v₁ ... vₙ) der Richtungskomponenten des anströmenden Windes die Geschwindigkeit (v) des anströmenden Windes und die Strömungsrichtung (s) des anströmenden Windes errechnet wird.

2. Windkraftmaschine mit einem im Wesentlichen lotrecht stehenden Turm (1), einer an der Spitze des Turmes (1) angeordneten, um die Längsachse (2) des Turmes (1) gesteuert bzw. geregelt drehbaren, Gondel (3) mit einem um eine im Wesentlichen horizontal ausgerichtete Drehachse (4) drehbaren Rotor (5) mit zumindest zwei an einer Nabe angeordneten Rotorblättern (6), einem mit der Nabe in Wirkverbindung stehenden elektrischen Generator (8), einer an der Spitze der Nabe in der Drehachse (4) des Rotors (5) liegend angeordneten von der Nabe wegweisenden Lanze (11), mindestens eine Einrichtung (10) zur Bestimmung der Strömungsrichtung (s) und mindestens eine Einrichtung zur Bestimmung der Geschwindigkeit (v) und der Strömungsrichtung (s) eines die Windkraftmaschine anströmenden Windes und eine Steuer- bzw. Regeleinrichtung (9) mindestens zur Steuerung bzw. Regelung der Ausrichtung des Rotors (5) gegen den die Windkraftmaschine anströmenden Wind,
**dadurch gekennzeichnet, dass**
die mindestens eine Einrichtung zur Bestimmung der Geschwindigkeit (v) und der Strömungsrichtung (s) des die Windkraftmaschine anströmenden Windes
• mindestens vier bis N an der Lanze (11) so angeordnete linienförmige Empfangsantennen (12.11, 12.12, 12.21, 12.22 ... 12.N1, 12.N2), wobei N eine positive ganze Zahl ist, aufweist, dass der anströmende Wind an den Empfangsantennen (12.11, 12.12, 12.21, 12.22 ... 12.N1, 12.N2) vorbeiströmt, und dass die Empfangsantennen (12.11, 12.12, 12.21, 12.22 ... 12.N1, 12.N2) so ausgebildet sind, dass von elektrisch beeinflussten, im anströmenden Wind mitgeführten Partikeln und Molekülen, die sich an den Empfangsantennen (12.11, 12.12, 12.21, 12.22 ... 12.N1, 12.N2) vorbeibewegen, durch elektrostatische Induktion in den Empfangsantennen (12.11, 12.12, 12.21, 12.22 ... 12.N1, 12.N2) elektrische Signale generiert werden, wobei jeweils zwei der Empfangsantennen (12.11, 12.12, 12.21, 12.22 ... 12.N1, 12.N2) ein korrespondierendes Empfangsantennenpaar ((12.11 - 12.12), (12.21 - 12.22) ... (12.N1 - 12.N2)) bilden, indem die Empfangsantennen (12.11, 12.12, 12.21, 12.22 ... 12.N1, 12.N2) des jeweiligen korrespondierenden Empfangsantennenpaares ((12.11 - 12.12), (12.21 - 12.22) ... (12.N1 - 12.N2)) in einem vorbestimmten Abstand (a) parallel zueinander und bezogen auf die Drehachse (4) des Rotors (5) hintereinander derart angeordnet sind, dass mindestens ein Teil der sich an der in Strömungsrichtung (s) des anströmenden Windes ersten Empfangsantenne (12.11, 12.21, ... 12.N1) des jeweiligen korrespondierenden Empfangsantennenpaares ((12.11 - 12.12), (12.21 - 12.22) ... (12.N1 - 12.N2))vorbeibewegenden Partikel und Moleküle des anströmenden Windes auch an der in Strömungsrichtung (s) des anströmenden Windes zweiten Empfangsantenne (12.12, 12.22, ... 12.N2) des korrespondierenden Empfangsantennenpaares ((12.11 - 12.12), (12.21 - 12.22) ... (12.N1 - 12.N2))vorbeibewegen, wenn der Rotor (5) gegen den die Windkraftmaschine anströmenden Wind ausgerichtet ist, und die Empfangsantennen (12.11, 12.12 ... 12.N1, 12.N2) mindestens eines der korrespondierenden Empfangsantennenpaare ((12.11 - 12.12) ... (12.N1 - 12.N2)) in einem Winkel α₁ mit 10° < α₁ < 80°, bevorzugt 15° < α₁ < 60°, zur Drehachse (4) des Rotors (5) und die Empfangsantennen (12.21, 12.22 ... 12.N1, 12.N2) mindestens eines der anderen korrespondierenden Empfangsantennenpaare ((12.21 - 12.22) ... (12.N1 - 12.N2)) in einem Winkel α₂ mit -10° > α₂ > -80°, bevorzugt -15° > α₂ > -60°, zur Drehachse (4) des Rotors (5) angeordnet sind,
• mindestens eine Korrelationsmesseinrichtung (15) aufweist, die so augebildet ist, dass mittels Korrelationsmessung die Zeit (t) bestimmbar ist, die die im anströmenden Wind mitgeführten, elektrisch beeinflussten Partikel und Moleküle zur Überwindung des Abstandes (a) zwischen den das jeweilige korrespondierende Empfangsantennenpaar ((12.11 - 12.12), (12.21 - 12.22) ... (12.N1 - 12.N2))bildenden Empfangsantennen (12.11, 12.12, 12.21. 12.22 ... 12.N1, 12.N2) benötigen, wobei die Empfangsantennen (12.11, 12.12 ... 12.N1, 12.N2) eines ersten der korrespondierenden Empfangsantennenpaare ((12.11 - 12.12) ... (12.N1 - 12.N2)), die in dem Winkel α₁, und die Empfangsantennen (12.21, 12.22 ... 12.(N+1)1, 12.(N+1)2) eines zweiten der korrespondierenden Empfangsantennenpaare ((12.21 - 12.22) ... (12.(N+1)1 - 12.(N+1)2)), die in dem Winkel α₂ zur Drehachse (4) des Rotors (5) angeordnet sind, mit je einem Eingang der Korrelationsmesseinrichtung (15) verbunden sind
• und einer Recheneinheit (16) zur Errechnung einer jeweiligen Geschwindigkeit (v₁ ... vₙ) aus dem Abstand (a) und der Zeit (t), die die im anströmenden Wind mitgeführten, elektrisch beeinflussten Partikel und Moleküle zur Überwindung des Abstandes (a) zwischen den das jeweilige korrespondierende Empfangsantennenpaar ((12.11 - 12.12), (12.21 - 12.22) ... (12.N1 - 12.N2)) bildenden Empfangsantennen (12.11, 12.12, 12.21, 12.22 ... 12.N1, 12.N2) benötigen, wobei die jeweilige Geschwindigkeit (v₁ ... vₙ) eine Richtungskomponente der Geschwindigkeit (v) des anströmenden Windes ist, die lotrecht zu den parallel angeodneten linienförmigen Empfangsantennen (12.11, 12.12, 12.21, 12.22 ... 12.N1, 12.N2) eines der korrespondierenden Empfangsantennenpaare ((12.11 - 12.12), (12.21 - 12.22) ... (12.N1 - 12.N2)) steht und aus den Geschwindigkeiten (v₁ ... vₙ) der Richtungskomponenten des anströmenden Windes die Geschwindigkeit (v) des anströmenden Windes und die Strömungsrichtung (s) des anströmenden Windes bezogen auf die Drehachse (4) des Rotors (5) errechnet wird.

3. Windkraftmaschine nach Anspruch 1 oder 2,
**dadurch gekennzeichnet, dass**
die die korrespondierenden Empfangsantennenpaare ((12.11 - 12.12), (12.21 - 12.22) ... (12.N1 - 12.N2))bildenden Empfangsantennen (12.11, 12.12, 12.21, 12.22 ... 12.N1 , 12.N2) als parallel zueinander angeordnete Stäbe oder Drähte ausgebildet sind.

4. Windkraftmaschine nach Anspruch 1,
**dadurch gekennzeichnet, dass**
an der Nabe ein Spinner (7) angeordnet ist und die Empfangsantennen (12.11, 12.12, 12.21, 12.22 ... 12.N1, 12.N2) auf der Wandung des Spinners (7) angeordnet sind.

5. Windkraftmaschine nach Anspruch 4,
**dadurch gekennzeichnet, dass**
der an der Nabe angeordnete Spinner (7) aus einem dielektrisch wirkenden Material besteht, die Empfangsantennen (12.11, 12.12, 12.21, 12.22 ... 12.N1, 12.N2) innerhalb der Wandung des Spinners (7) oder an der inneren Seite der Wandung des Spinners (7) angeordnet sind.

6. Windkraftmaschine nach Anspruch 1,
**dadurch gekennzeichnet, dass**
an der Nabe ein Spinner (7) angeordnet ist und eine Empfangsantenne (12.11, 12.12, 12.21, 12.22 ... 12.N1, 12.N2) jeweils durch mehrere elektrisch miteinander verbundene in einer Linie angeordnete aus dem Spinner (7) ragende Nadeln gebildet wird.

7. Windkraftmaschine nach Anspruch 1 bis 6,
**dadurch gekennzeichnet, dass**
• mindestens eine Elektrode (13), die mindestens einen Elektrodenabschnitt mit einer Elektrodenkontur mit einem mittleren Radius rₘ mit 0,01 mm ≤ rₘ ≤ 1,2 mm aufweist, wobei die Elektrode (13) entgegen der Strömungsrichtung (s) des die Windkraftmaschine anströmenden Windes in einer Entfernung von 100 mm bis 1500 mm, bevorzugt ca. 200 mm, zur bezogen auf die Strömungsrichtung (s) des die Windkraftmaschine anströmenden Windes ersten Empfangsantenne (12.11 , 12.21 ... 12.N1) derart angeordnet ist, dass mindestens ein Teil des den Elektrodenabschnitt mit der Elektrodenkontur mit dem mittleren Radius rₘ mit 0,01 mm ≤ rₘ ≤ 1,2 mm umströmenden Windes nachfolgend an den Empfangsantennen (12.11,12.12, 12.21,12.22 ... 12.N1, 12.N2) in einer Entfernung < 500 mm vorbeiströmt, wenn der Rotor (5) gegen den die Windkraftmaschine anströmenden Wind ausgerichtet ist,
• mindestens eine zu der Elektrode (13) elektrisch wirkende Gegenelektrode (18) und
• eine Hochspannungsquelle (14) mit einer Spannung U mit einem Betrag von 12 kV ≤ |U| ≤ 20 kV, bevorzugt 15 kV ≤ |U| ≤ 17 kV, umfasst, mit deren unterschiedlichen Polen die Elektrode (13) und die Gegenelektrode (18) verbunden sind.

8. Windkraftmaschine nach Anspruch 7,
**dadurch gekennzeichnet, dass**
die Nabe der Windkraftmaschine elektrisch leitfähig ist und die Nabe elektrisch als Gegenelektrode (18) zu der Elektrode (13) geschaltet ist, d.h. elektrisch mit einem Pol der Hochspannungsquelle (14) verbunden ist.

9. Windkraftmaschine nach Anspruch 7,
**dadurch gekennzeichnet, dass**
die an der Nabe angeordnete Lanze (11) elektrisch leitfähig ist und die Lanze (11) elektrisch als Gegenelektrode (18) zu der Elektrode (13) geschaltet ist, d.h. elektrisch mit einem Pol der Hochspannungsquelle (14) verbunden ist.

10. Windkraftmaschine nach Anspruch 7,
**dadurch gekennzeichnet, dass**
an der Nabe ein elektrisch leitfähiger Spinner (7) angeordnet ist und der Spinner (7) elektrisch als Gegenelektrode (18) zu der Elektrode (13) geschaltet ist, d.h. elektrisch mit einem Pol der Hochspannungsquelle (14) verbunden ist.

11. Windkraftmaschine nach Anspruch 7,
**dadurch gekennzeichnet, dass**
die Elektrode (13) als Kathode und die Gegenelektrode (18) auf Massepotenzial geschaltet ist.

12. Windkraftmaschine nach Anspruch 7 bis 11,
**dadurch gekennzeichnet, dass**
die Elektrode (13) als mindestens ein aus dem Spinner (7) ragender Stab oder als mindestens eine aus dem Spinner (7) ragende Nadel ausgebildet ist.

13. Windkraftmaschine nach Anspruch 7 bis 12,
**dadurch gekennzeichnet, dass**
die Elektrode (13) eine oder mehrere Spitzen oder Schneiden mit einer Kontur mit einem mittleren Radius rₘ mit 0,01 mm ≤ rₘ ≤ 1,2 mm aufweist oder als Draht mit einem mittleren Radius rₘ mit 0,1 mm ≤ rₘ ≤ 1,2 mm ausgebildet ist.

14. Windkraftmaschine nach Anspruch 1 bis 13,
**dadurch gekennzeichnet, dass**
die Empfangsantennen (12.11, 12.12, 12.21, 12.22 ... 12.N1, 12.N2) starr mit dem drehbaren Rotor (5) verbunden sind und eine Drehwinkelerfassungseinrichtung zur Erfassung des Drehwinkels des drehbaren Rotors (5) vorgesehen ist und die Drehwinkelerfassungseinrichtung mit der Recheneinheit (16) wirkverbunden ist und der Drehwinkel des drehbaren Rotors (5) in die Berechnung der Richtung des anströmenden Windes einfließt.

15. Windkraftmaschine nach Anspruch 1 bis 13,
**dadurch gekennzeichnet, dass**
die Empfangsantennen (12.11,12.12, 12.21, 12.22 ... 12.N1 , 12.N2) starr mit dem drehbaren Rotor (5) verbunden sind und eine Einrichtung zur Erfassung mindestens eines sich mit dem Rotor (5) um die Drehachse (4) des Rotors (5) drehenden Punktes vorgesehen ist und die Einrichtung zur Erfassung mindestens eines sich mit dem Rotor (5) um die Drehachse (4) des Rotors (5) drehenden Punktes mit der Recheneinheit (16) wirkverbunden ist und die Ausgangssignale der Einrichtung zur Erfassung mindestens eines sich mit dem Rotor (5) um die Drehachse (4) des Rotors (5) drehenden Punktes in die Berechnung der Richtung des anströmenden Windes einfließt.

## Claims

1. Wind turbine having a substantially vertically standing tower (1), a nacelle (3), which is arranged at the top of the tower (1) and is rotatable in a controlled or regulated manner about the longitudinal axis (2) of the tower (1), having a rotor (5), which is rotatable about a substantially horizontally oriented axis of rotation (4) and has at least two rotor blades (6) arranged on a hub, an electrical generator (8) in operative connection with the hub, at least one device (10) for determining the flow direction (s) and at least one device for determining the velocity (v) and the flow direction (s) of a wind incident on the wind turbine, and a controlling or regulating device (9) at least for controlling or regulating the orientation of the rotor (5) towards the wind incident on the wind turbine,
**characterized in that**
the at least one device for determining the velocity (v) and the flow direction (s) of the wind incident on the wind turbine has
• at least four to N straight reception antennas (12.11, 12.12, 12.21, 12.22, ... 12.N1, 12.N2), with N being a positive integer, which antennas are arranged on the hub such that the incident wind flows past the reception antennas (12.11, 12.12, 12.21, 12.22, ... 12.N1, 12.N2), and that the reception antennas (12.11, 12.12, 12.21, 12.22, ... 12.N1, 12.N2) are designed such that electrically influenced particles and molecules carried along in the incident wind which move past the reception antennas (12.11, 12.12, 12.21, 12.22, ... 12.N1, 12.N2) generate electrical signals in the reception antennas (12.11, 12.12, 12.21, 12.22, ... 12.N1, 12.N2) by electrostatic induction, wherein two of the reception antennas (12.11, 12.12, 12.21, 12.22 ... 12.N1, 12.N2) in each case form a corresponding reception antenna pair ((12.11 - 12.12), (12.21 - 12.22) ... (12.N1 - 12.N2)), whereby the reception antennas (12.11, 12.12, 12.21, 12.22 ... 12.N1, 12.N2) of the respective corresponding reception antenna pair ((12.11 - 12.12), (12.21 - 12.22) ... (12.N1 - 12.N2)) are arranged at a predetermined spacing (a) parallel to each other and one after another in relation to the axis of rotation (4) of the rotor (5) in such a way that at least some of the particles and molecules in the incident wind moving past the first reception antenna (12.11, 12.21, ... 12.N1) in the flow direction (s) of the incident wind of the respective corresponding reception antenna pair ((12.11 - 12.12), (12.21 - 12.22) ... (12.N1 - 12.N2)) also move past the second reception antenna (12.12, 12.22, ... 12.N2) in the flow direction (s) of the incident wind of the corresponding reception antenna pair ((12.11 - 12.12), (12.21 - 12.22) ... (12.N1 - 12.N2)) when the rotor (5) is oriented towards the wind incident on the wind turbine, and the reception antennas (12.11, 12.12, ... 12.N1, 12.N2) of at least one of the corresponding reception antenna pairs ((12.11 - 12.12), ... (12.N1 - 12.N2)) are arranged at an angle α₁, where 10° < α₁ < 80°, preferably 15° < α₁ < 60°, to the axis of rotation (4) of the rotor (5) or to a plane which is spanned by a straight line (17), lying between the reception antenna pairs ((12.11 - 12.12), (12.21 - 12.22) ... (12.N1 - 12.N2)), and the axis of rotation (4) of the rotor (5), and the reception antennas (12.21, 12.22, ... 12.N1, 12.N2) of at least one of the other corresponding reception antenna pairs ((12.21 - 12.22), ... (12.N1 - 12.N2)) are arranged at an angle α₂, where -10° > α_{2 >} -80°, preferably -15° > α₂ > - 60°, to the axis of rotation (4) of the rotor (5) or to the plane which is spanned by the straight line (17), lying between the reception antenna pairs ((12.11 - 12.12), (12.21 - 12.22) ... (12.N1 - 12.N2)), and the axis of rotation (4) of the rotor (5),
• at least one correlation measuring device (15), which is designed such that correlation measurement can be used to determine the time (t) which the electrically influenced particles and molecules carried along in the incident wind need to cross the spacing (a) between the reception antennas (12.11, 12.12, 12.21, 12.22 ... 12.N1, 12.N2) forming the respective corresponding reception antenna pair ((12.11 - 12.12), (12.21 - 12.22) ... (12.N1 - 12.N2)), wherein the reception antennas (12.11, 12.12 ... 12.N1, 12.N2) of a first of the corresponding reception antenna pairs ((12.11 - 12.12) ... (12.N1 - 12.N2)) which are arranged at the angle α₁ and the reception antennas (12.21, 12.22 ... 12. (N+1)1, 12. (N+1)2) of a second of the corresponding reception antenna pairs ((12.21 - 12.22) ... (12.(N+1)1 - 12. (N+1)2)) which are arranged at the angle α₂ to the axis of rotation (4) of the rotor (5) or to the plane which is spanned by the straight line (17), lying between the reception antenna pairs ((12.11 - 12.12), (12.21 - 12.22) ... (12.N1 - 12.N2)), and the axis of rotation (4) of the rotor (5) are each connected to an input of the correlation measuring device (15)
• and a computing unit (16) for calculating a respective velocity (v₁ ... vₙ) from the spacing (a) and the time (t) which the electrically influenced particles and molecules carried along in the incident wind need to cross the spacing (a) between the reception antennas (12.11, 12.12, 12.21, 12.22 ... 12.N1, 12.N2) forming the respective corresponding reception antenna pair ((12.11 - 12.12), (12.21 - 12.22) ... (12.N1-12.N2)), wherein the respective velocity (v₁ ... vₙ) is a directional component of the velocity (v) of the incident wind which is perpendicular to the parallelly arranged linear reception antennas (12.11, 12.12, 12.21, 12.22 ... 12.N1, 12.N2) of one of the corresponding reception antenna pairs ((12.11 - 12.12), (12.21 - 12.22) ... (12.N1 - 12.N2)) and the velocity (v) of the incident wind and the flow direction (s) of the incident wind are calculated from the velocities (v₁ ... vₙ) of the directional components of the incident wind.

2. Wind turbine having a substantially vertically standing tower (1), a nacelle (3), which is arranged at the top of the tower (1) and is rotatable in a controlled or regulated manner about the longitudinal axis (2) of the tower (1), having a rotor (5), which is rotatable about a substantially horizontally oriented axis of rotation (4) and has at least two rotor blades (6) arranged on a hub, an electrical generator (8) in operative connection with the hub, a lance (11), which is arranged at the tip of the hub in the axis of rotation (4) of the rotor (5) and points away from the hub, at least one device (10) for determining the flow direction (s) and at least one device for determining the velocity (v) and the flow direction (s) of a wind incident on the wind turbine, and a controlling or regulating device (9) at least for controlling or regulating the orientation of the rotor (5) towards the wind incident on the wind turbine,
**characterized in that**
the at least one device for determining the velocity (v) and the flow direction (s) of the wind incident on the wind turbine has
• at least four to N linear reception antennas (12.11, 12.12, 12.21, 12.22 ... 12.N1, 12.N2), with N being a positive integer, which antennas are arranged on the lance (11) such that the incident wind flows past the reception antennas (12.11, 12.12, 12.21, 12.22 ... 12.N1, 12.N2), and that the reception antennas (12.11, 12.12, 12.21, 12.22 ... 12.N1, 12.N2) are designed such that electrically influenced particles and molecules carried along in the incident wind which move past the reception antennas (12.11, 12.12, 12.21, 12.22 ... 12.N1, 12.N2) generate electrical signals in the reception antennas (12.11, 12.12, 12.21, 12.22 ... 12.N1, 12.N2) by electrostatic induction, wherein two of the reception antennas (12.11, 12.12, 12.21, 12.22 ... 12.N1, 12.N2) in each case form a corresponding reception antenna pair ((12.11 - 12.12), (12.21 - 12.22) ... (12.N1 - 12.N2)), whereby the reception antennas (12.11, 12.12, 12.21, 12.22 ... 12.N1, 12.N2) of the respective corresponding reception antenna pair ((12.11 - 12.12), (12.21 - 12.22) ... (12.N1 - 12.N2)) are arranged at a predetermined spacing (a) parallel to each other and one after another in relation to the axis of rotation (4) of the rotor (5) in such a way that at least some of the particles and molecules in the incident wind moving past the first reception antenna (12.11, 12.21, ... 12.N1) in the flow direction (s) of the incident wind of the respective corresponding reception antenna pair ((12.11 - 12.12), (12.21 - 12.22) ... (12.N1 - 12.N2)) also move past the second reception antenna (12.12, 12.22, ... 12.N2) in the flow direction (s) of the incident wind of the corresponding reception antenna pair ((12.11 - 12.12), (12.21 - 12.22) ... (12.N1 - 12.N2)) when the rotor (5) is oriented towards the wind incident on the wind turbine, and the reception antennas (12.11, 12.12 ... 12.N1, 12.N2) of at least one of the corresponding reception antenna pairs ((12.11 - 12.12) ... (12.N1 - 12.N2)) are arranged at an angle α₁, where 10° < α₁ < 80°, preferably 15° < α₁ < 60°, to the axis of rotation (4) of the rotor (5) and the reception antennas (12.21, 12.22 ... 12.N1, 12.N2) of at least one of the other corresponding reception antenna pairs ((12.21 - 12.22) ... (12.N1 - 12.N2)) are arranged at an angle α₂, where -10° > α₂ > -80°, preferably -15° > α₂ > -60°, to the axis of rotation (4) of the rotor (5),
• at least one correlation measuring device (15) which is designed such that correlation measurement can be used to determine the time (t) which the electrically influenced particles and molecules carried along in the incident wind need to cross the spacing (a) between the reception antennas (12.11, 12.12, 12.21, 12.22 ... 12.N1, 12.N2) forming the respective corresponding reception antenna pair ((12.11 - 12.12), (12.21 - 12.22) ... (12.N1 - 12.N2)), wherein the reception antennas (12.11, 12.12 ... 12.N1, 12.N2) of a first of the corresponding reception antenna pairs ((12.11 - 12.12) ... (12.N1 - 12.N2)) which are arranged at the angle α₁ and the reception antennas (12.21, 12.22 ... 12. (N+1)1, 12. (N+1)2) of a second of the corresponding reception antenna pairs ((12.21 - 12.22) ... (12. (N+1)1 - 12. (N+1)2)) which are arranged at the angle α₂ to the axis of rotation (4) of the rotor (5) are each connected to an input of the correlation measuring device (15)
• and a computing unit (16) for calculating a respective velocity (v₁ ... vₙ) from the spacing (a) and the time (t) which the electrically influenced particles and molecules carried along in the incident wind need to cross the spacing (a) between the reception antennas (12.11, 12.12, 12.21, 12.22 ... 12.N1, 12.N2) forming the respective corresponding reception antenna pair ((12.11 - 12.12), (12.21 - 12.22) ... (12.N1 - 12.N2)), wherein the respective velocity (v₁ ... vₙ) is a directional component of the velocity (v) of the incident wind which is perpendicular to the parallelly arranged linear reception antennas (12.11, 12.12, 12.21, 12.22 ... 12.N1, 12.N2) of one of the corresponding reception antenna pairs ((12.11 - 12.12), (12.21 - 12.22) ... (12.N1 - 12.N2)) and the velocity (v) of the incident wind and the flow direction (s) of the incident wind in relation to the axis of rotation (4) of the rotor (5) are calculated from the velocities (v₁ ... vₙ) of the directional components of the incident wind.

3. Wind turbine according to Claim 1 or 2,
**characterized in that**
the reception antennas (12.11, 12.12, 12.21, 12.22 ... 12.N1, 12.N2) forming the corresponding reception antenna pairs ((12.11 - 12.12), (12.21 - 12.22) ... (12.N1 - 12.N2)) are designed as rods or wires arranged parallel to each another.

4. Wind turbine according to Claim 1,
**characterized in that**
a spinner (7) is arranged on the hub and the reception antennas (12.11, 12.12, 12.21, 12.22 ... 12.N1, 12.N2) are arranged on the shell of the spinner (7).

5. Wind turbine according to Claim 4,
**characterized in that**
the spinner (7) arranged on the hub consists of a dielectrically acting material and the reception antennas (12.11, 12.12, 12.21, 12.22 ... 12.N1, 12.N2) are arranged within the shell of the spinner (7) or on the inner side of the shell of the spinner (7).

6. Wind turbine according to Claim 1,
**characterized in that**
a spinner (7) is arranged on the hub and a reception antenna (12.11, 12.12, 12.21, 12.22 ... 12.N1, 12.N2) is in each case formed by a plurality of needles which are electrically connected to each other, arranged in a line and project from the spinner (7).

7. Wind turbine according to Claim 1 to 6, **characterized in that** it comprises
• at least one electrode (13) which has at least one electrode section having an electrode contour with a mean radius rₘ, where 0.01 mm ≤ rₘ ≤ 1.2 mm, wherein the electrode (13), is arranged counter to the flow direction (s) of the wind incident on the wind turbine at a distance of 100 mm to 1500 mm, preferably around 200 mm, from the first reception antenna (12.11, 12.21 ... 12.N1) in relation to the flow direction (s) of the wind incident on the wind turbine in such a way that at least some of the wind flowing around the electrode section having the electrode contour with the mean radius rₘ, where 0.01 mm ≤ rₘ ≤ 1.2 mm, subsequently flows past the reception antennas (12.11, 12.12, 12.21, 12.22 ... 12.N1, 12.N2) at a distance of < 500 mm when the rotor (5) is oriented towards the wind incident on the wind turbine,
• at least one electrically acting counter electrode (18) to the electrode (13) and
• a high-voltage source (14) having a voltage U with an absolute value of 12 kV ≤ |U| ≤ 20 kV, preferably 15 kV ≤ |U| ≤ 17 kV, the electrode (13) and the counter electrode (18) being connected to the different poles thereof.

8. Wind turbine according to Claim 7,
**characterized in that**
the hub of the wind turbine is electrically conductive and the hub is electrically connected as the counter electrode (18) to the electrode (13), i.e. is electrically connected to a pole of the high-voltage source (14).

9. Wind turbine according to Claim 7,
**characterized in that**
the lance (11) arranged on the hub is electrically conductive and the lance (11) is electrically connected as the counter electrode (18) to the electrode (13), i.e. is electrically connected to a pole of the high-voltage source (14).

10. Wind turbine according to Claim 7,
**characterized in that**
an electrically conductive spinner (7) is arranged on the hub and the spinner (7) is electrically connected as the counter electrode (18) to the electrode (13), i.e. is electrically connected to a pole of the high-voltage source (14).

11. Wind turbine according to Claim 7,
**characterized in that**
the electrode (13) is connected as a cathode and the counter electrode (18) is connected to earth potential.

12. Wind turbine according to Claims 7 to 11,
**characterized in that**
the electrode (13) is designed as at least one rod projecting from the spinner (7) or as at least one needle projecting from the spinner (7).

13. Wind turbine according to Claims 7 to 12,
**characterized in that**
the electrode (13) has one or more tips or edges having a contour with a mean radius rₘ, where 0.01 mm ≤ rₘ ≤ 1.2 mm, or is designed as a wire with a mean radius rₘ, where 0.01 mm ≤ rₘ ≤ 1.2 mm.

14. Wind turbine according to Claim 1 to 13,
**characterized in that**
the reception antennas (12.11, 12.12, 12.21, 12.22 ... 12.N1, 12.N2) are rigidly connected to the rotatable rotor (5) and a rotation-angle detection device for detecting the rotation angle of the rotatable rotor (5) is provided and the rotation-angle detection device is in operative connection with the computing unit (16) and the rotation angle of the rotatable rotor (5) is included in the calculation of the direction of the incident wind.

15. Wind turbine according to Claims 1 to 13,
**characterized in that**
the reception antennas (12.11, 12.12, 12.21, 12.22 ... 12.N1, 12.N2) are rigidly connected to the rotatable rotor (5) and a device for detecting at least one point which is rotating with the rotor (5) around the axis of rotation (4) of the rotor (5) is provided and the device for detecting at least one point which is rotating with the rotor (5) around the axis of rotation (4) of the rotor (5) is in operative connection with the computing unit (16) and the output signals of the device for detecting at least one point which is rotating with the rotor (5) around the axis of rotation (4) of the rotor (5) are included in the calculation of the direction of the incident wind.

## Revendications

1. Eolienne, comprenant un mât (1) posé de manière substantiellement perpendiculaire, une nacelle (3) disposée à la pointe du mât (1), pivotante de manière commandée ou régulée autour de l'axe longitudinal (2) du mât (1), un rotor (5) pivotant autour d'un axe de rotation (4) orienté de manière substantiellement horizontale et pourvu d'au moins deux pales de rotor (6) disposées au niveau d'un moyeu, un générateur électrique (8) en relation fonctionnelle avec le moyeu, au moins un dispositif (10) pour déterminer la direction de flux (s), et au moins un dispositif pour déterminer la vitesse (v) et la direction de flux (s) d'un vent arrivant sur l'éolienne, et un dispositif de commande et de régulation (9) servant au moins à commander ou à réguler l'orientation du rotor (5) contre le vent arrivant sur l'éolienne,
**caractérisée en ce que** ledit au moins un dispositif de détermination de la vitesse (v) et de la direction de flux (s) du vent arrivant sur l'éolienne
• présente au moins quatre à N, N étant un nombre entier positif, antennes de réception linéaires (12.11, 12.12, 12.21, 12.22, ... 12.N1, 12.N2) disposées sur le moyeu de telle sorte que le vent arrivant passe devant les antennes de réception (12.11, 12.12, 12.21, 12.22, ... 12.N1, 12.N2), et **en ce que** les antennes de réception (12.11, 12.12, 12.21, 12.22, ... 12.N1, 12.N2) sont réalisées de telle sorte que des particules et molécules influencées électriquement, entraînées par le vent arrivant, qui passent devant les antennes de réception (12.11, 12.12, 12.21, 12.22, ... 12.N1, 12.N2) génèrent des signaux électriques dans les antennes de réception (12.11, 12.12, 12.21, 12.22, ... 12.N1, 12.N2) par induction électrostatique, respectivement deux des antennes de réception (12.11, 12.12, 12.21, 12.22 ... 12.N1, 12.N2) formant une paire d'antennes de réception ((12.11 - 12.12), (12.21 - 12.22) ... (12.N1 - 12.N2)) correspondante **en ce que** les antennes de réception (12.11, 12.12, 12.21, 12.22 ... 12.N1, 12.N2) de la paire d'antennes de réception ((12.11 - 12.12), (12.21 - 12.22) ... (12.N1 - 12.N2)) correspondante respective sont disposées à une distance prédéterminée (a) en parallèle les unes aux autres et par rapport à l'axe de rotation (4) du rotor (5) les unes après les autres de telle sorte qu'au moins une partie des particules et molécules du vent arrivant passant devant la première antenne de réception (12.11, 12.21, ... 12.N1), dans la direction de flux (s) du vent arrivant, de la paire d'antennes de réception ((12.11 - 12.12), (12.21 - 12.22) ... (12.N1 ... 12.N2)) correspondante respective passe aussi devant la deuxième antenne de réception (12.12, 12.22, ... 12.N2), dans la direction de flux (s) du vent arrivant, de la paire d'antennes de réception ((12.11 - 12.12), (12.21 - 12.22) ... (12.N1 - 12.N2)) correspondante si le rotor (5) est orienté contre le vent arrivant sur l'éolienne, et les antennes de réception (12.11, 12.12, ... 12.N1, 12.N2) d'au moins l'une des paires d'antennes de réception ((12.11 - 12.12), ... (12.N1 - 12.N2)) correspondantes sont disposées à un angle α₁, où 10° < α₁ < 80°, de préférence 15° < α₁ < 60°, par rapport à l'axe de rotation (4) du rotor (5) ou à un plan qui est défini par une droite (17) située entre les paires d'antennes de réception ((12.11 - 12.12), (12.21 - 12.22) ... (12.N1 - 12.N2)) et l'axe de rotation (4) du rotor (5), et les antennes de réception (12.21, 12.22, ... 12.N1, 12.N2) d'au moins l'une des autres paires d'antennes de réception ((12.21 - 12.22), ... (12.N1 - 12.N2)) correspondantes sont disposées à un angle α₂, où -10° > α₂ > -80°, de préférence -15° > α₂ > -60°, par rapport à l'axe de rotation (4) du rotor (5) ou au plan qui est défini par la droite (17) située entre les paires d'antennes de réception ((12.11 - 12.12), (12.21 - 12.22) ... (12.N1 - 12.N2)) et l'axe de rotation (4) du rotor (5),
• présente au moins un dispositif de mesure de corrélation (15) qui est réalisé de telle sorte qu'une mesure de corrélation permet de déterminer le temps (t) nécessaire aux particules et molécules électriquement influencées, entraînées par le vent arrivant, pour couvrir la distance (a) entre les antennes de réception (12.11, 12.12, 12.21, 12.22 ... 12.N1, 12.N2) formant la paire d'antennes de réception ((12.11 - 12.12), (12.21 - 12.22) ... (12.N1 - 12.N2)) correspondante respective, dans laquelle les antennes de réception (12.11, 12.12 ... 12.N1, 12.N2) d'une première des paires d'antennes de réception ((12.11 - 12.12) ... (12.N1 - 12.N2)) correspondantes, qui sont disposées à l'angle α₁, et les antennes de réception (12.21, 12.22 ... 12.(N+1)1, 12.(N+1)2) d'une deuxième des paires d'antennes de réception ((12.21 -12.22) ... (12.(N+1)1 - 12.(N+1)2)) correspondantes, qui sont disposées à l'angle α₂ par rapport à l'axe de rotation (4) du rotor (5) ou au plan qui est défini par la droite (17) située entre les paires d'antennes de réception ((12.11 - 12.12), (12.21 - 12.22) ... (12.N1 - 12.N2)) et l'axe de rotation (4) du rotor (5), sont reliées à respectivement une entrée du dispositif de mesure de corrélation (15),
• et une unité de calcul (16) servant à calculer une vitesse respective (v₁ ... vₙ) à partir de la distance (a) et du temps (t) nécessaires aux particules et molécules électriquement influencées, entraînées par le vent arrivant, pour couvrir la distance (a) entre les antennes de réception (12.11, 12.12, 12.21, 12.22 ... 12.N1, 12.N2) formant la paire d'antennes de réception ((12.11 - 12.12), (12.21 - 12.22) ... (12.N1 - 12.N2)) correspondante respective, la vitesse respective (v₁ ... vₙ) étant une composante directionnelle de la vitesse (v) du vent arrivant qui est perpendiculaire aux antennes de réception linéaires (12.11, 12.12, 12.21, 12.22 ... 12.N1, 12.N2), disposées en parallèle, d'une des paires d'antennes de réception ((12.11 - 12.12), (12.21 - 12.22) ... (12.N1 - 12.N2)) correspondantes, et la vitesse (v) du vent arrivant et la direction de flux (s) du vent arrivant sont calculées à partir des vitesses (v₁ ... vₙ) des composantes directionnelles du vent arrivant.

2. Eolienne comprenant un mât (1) posé de manière substantiellement perpendiculaire, une nacelle (3) disposée à la pointe du mât (1), pivotante de manière commandée ou régulée autour de l'axe longitudinal (2) du mât (1), un rotor (5) pivotant autour d'un axe de rotation (4) orienté de manière substantiellement horizontale et pourvu d'au moins deux pales de rotor (6) disposées au niveau d'un moyeu, un générateur électrique (8) en relation fonctionnelle avec le moyeu, une perche (11) disposée couchée à la pointe du moyeu sur l'axe de rotation (4) du rotor (5) et détournée du moyeu, au moins un dispositif (10) pour déterminer la direction de flux (s) et au moins un dispositif pour déterminer la vitesse (v) et la direction de flux (s) d'un vent arrivant sur l'éolienne, et un dispositif de commande et de régulation (9) au moins pour commander ou réguler l'orientation du rotor (5) contre le vent arrivant sur l'éolienne, **caractérisée en ce que** ledit au moins un dispositif de détermination de la vitesse (v) et de la direction de flux (s) du vent arrivant sur l'éolienne
• présente au moins quatre à N, N étant un nombre entier positif, antennes de réception linéaires (12.11, 12.12, 12.21, 12.22 ... 12.N1, 12.N2) disposées sur la perche (11) de telle sorte que le vent arrivant passe devant les antennes de réception (12.11, 12.12, 12.21, 12.22 ... 12.N1, 12.N2), et que les antennes de réception (12.11, 12.12, 12.21, 12.22 ... 12.N1, 12.N2) sont réalisées de telle sorte que des particules et molécules électriquement influencées, entraînées par le vent arrivant, qui passent devant les antennes de réception (12.11, 12.12, 12.21, 12.22 ... 12.N1, 12.N2) génèrent des signaux électriques dans les antennes de réception (12.11, 12.12, 12.21, 12.22 ... 12.N1, 12.N2) par induction électrostatique, respectivement deux des antennes de réception (12.11, 12.12, 12.21, 12.22 ... 12.N1, 12.N2) formant une paire d'antennes de réception ((12.11 - 12.12), (12.21 - 12.22) ... (12.N1 - 12.N2)) correspondante **en ce que** les antennes de réception (12.11, 12.12, 12.21, 12.22 ... 12.N1, 12.N2) de la paire d'antennes de réceptions ((12.11 - 12.12), (12.21 - 12.22) ... 12.N1 - 12.N2)) correspondante respective sont disposées à une distance prédéterminée (a) en parallèle les unes aux autres et par rapport à l'axe de rotation (4) du rotor (5) les unes après les autres de telle sorte qu'au moins une partie des particules et molécules du vent arrivant qui passe devant la première antenne de réception (12.11, 12.21, ... 12.N 1), dans la direction de flux (s) du vent arrivant, de la paire d'antennes de réception ((12.11 - 12.12), (12.21 - 12.22) ... (12.N1 - 12.N2)) correspondante respective passe aussi devant la deuxième antenne de réception (12.12, 12.22, ... 12.N2), dans la direction de flux (s) du vent arrivant, de la paire d'antennes de réception ((12.11 - 12.12), (12.21 - 12.22) ... (12.N1 - 12.N2)) correspondante respective si le rotor (5) est orienté contre le vent arrivant sur l'éolienne, et les antennes de réception (12.11, 12.12 ... 12.N1, 12.N2) d'au moins l'une des paires d'antennes de réception ((12.11 - 12.12) ... (12.N1 - 12.N2)) correspondantes sont disposées à un angle α₁, où 10° < α₁ < 80°, de préférence 15° < α₁ < 60°, par rapport à l'axe de rotation (4) du rotor (5), et les antennes de réception (12.21, 12.22 ... 12.N1, 12.N2) d'au moins l'une des autres paires d'antennes de réception ((12.21 - 12.22) ... (12.N1 - 12.N2)) correspondantes sont disposées à un angle α₂, où -10° > α₂ > -80°, de préférence - 15° > α₂ > -60°, par rapport à l'axe de rotation (4) du rotor (5),
• présente au moins un dispositif de mesure de corrélation. (15) qui est réalisé de telle sorte qu'une mesure de corrélation permet de déterminer le temps (t) nécessaire aux particules et molécules électriquement influencées, entraînées par le vent arrivant, pour couvrir la distance (a) entre les antennes de réception (12.11, 12.12, 12.21. 12.22 ... 12.N1, 12N2) formant la paire d'antennes de réception ((12.11 - 12.12), (12.21 - 12.22) ... (12.N1 - 12.N2)) correspondante respective, dans laquelle les antennes de réception (12.11, 12.12 ... 12.N1, 12.N2) d'une première des paires d'antennes de réception ((12.11 - 12.12) ... (12.N1 - 12.N2)) correspondantes, qui sont disposées à l'angle α₁, et les antennes de réception (12.21, 12.22 ... 12. (N+1)1, 12. (N+1)2) d'une deuxième des paires d'antennes de réception ((12.21 - 12.22) ... (12.(N+1)1 - 12.(N+1)2)) correspondantes, qui sont disposées à l'angle α₂ par rapport à l'axe de rotation (4) du rotor (5), sont reliées à respectivement une entrée du dispositif de mesure de corrélation (15),
• et une unité de calcul (16) pour calculer une vitesse respective (v₁ ... vₙ) à partir de la distance (a) et du temps (t) nécessaires aux particules et molécules électriquement influencées, entraînées par le vent arrivant, pour couvrir la distance (a) entre les antennes de réception (12.11, 12.12, 12.21, 12.22 ... 12.N1, 12.N2) formant la paire d'antennes de réception ((12.11 - 12.12), (12.21 - 12.22) ... (12.N1 - 12. N2)) correspondante respective, dans laquelle la vitesse respective (v₁ ... vₙ) est une composante directionnelle de la vitesse (v) du vent arrivant qui est perpendiculaire aux antennes de réception linéaires (12.11, 12.12, 12.21, 12.22 ... 12.N1, 12.N2), disposées en parallèle, d'une des paires d'antennes de réception ((12.11 - 12.12), (12.21 - 12.22) ... (12.N1 - 12.N2)) correspondantes, et la vitesse (v) du vent arrivant et la direction de flux (s) du vent arrivant par rapport à l'axe de rotation (4) du rotor (5) sont calculées à partir des vitesses (v₁ ... vₙ) des composantes directionnelles du vent arrivant.

3. Eolienne selon la revendication 1 ou 2, **caractérisée en ce que** les antennes de réception (12.11, 12.12, 12.21, 12.22 ... 12.N1, 12.N2) formant les paires d'antennes de réception ((12.11 - 12.12), (12.21 - 12.22) ... (12.N1 - 12.N2)) correspondantes sont réalisées sous forme de barres ou de fils métalliques disposés en parallèle les uns aux autres.

4. Eolienne selon la revendication 1, **caractérisée en ce qu'**une monture d'antenne (7) est disposée sur le moyeu, et les antennes de réception (12.11, 12.12, 12.21, 12.22 ... 12.N1, 12.N2) sont disposées sur la paroi de la monture d'antenne (7).

5. Eolienne selon la revendication 4, **caractérisée en ce que** la monture d'antenne (7) disposée sur le moyeu est composée d'un matériau à effet diélectrique, et les antennes de réception (12.11, 12.12, 12.21, 12.22 ... 12.N1, 12.N2) sont disposées à l'intérieur de la paroi de la monture d'antenne (7) ou sur la face intérieure de la paroi de la monture d'antenne (7).

6. Eolienne selon la revendication 1, **caractérisée en ce qu'**une monture d'antenne (7) est disposée sur le moyeu, et une antenne de réception (12.11, 12.12, 12.21, 12.22 ... 12.N1, 12.N2) est formée respectivement par plusieurs aiguilles électriquement reliées ensemble, disposées en ligne et dépassant de la monture d'antenne (7).

7. Eolienne selon les revendications 1 à 6, **caractérisée en ce que**
• au moins une électrode (13) qui présente au moins une partie d'électrode ayant un contour d'électrode avec un rayon moyen rₘ, où 0,01 mm ≤ rₘ ≤ 1,2 mm, dans laquelle l'électrode (13) est disposée à l'opposé de la direction de flux (s) du vent arrivant sur l'éolienne à une distance de 100 mm à 1500 mm, de préférence d'environ 200 mm, sur la première antenne de réception (12.11, 12.21 ... 12.N1), par rapport à la direction de flux (s) du vent arrivant sur l'éolienne, de telle sorte qu'au moins une partie du vent contournant la partie d'électrode ayant le contour d'électrode avec le rayon moyen rₘ, où 0,01 mm ≤ rₘ ≤ 1,2 mm, passe ensuite devant les antennes de réception (12.11, 12.12, 12.21, 12.22 ... 12.N1, 12.N2) à une distance de < 500 mm si le rotor (5) est orienté contre le vent arrivant sur l'éolienne,
• au moins une contre-électrode (18) ayant un effet électrique par rapport à l'électrode (13), et
• comprend une source de haute tension (14) ayant une tension U d'une grandeur de 12 kV ≤ |U| ≤ 20 kV, de préférence 15 kV ≤ |U| ≤ 17 kV, aux différents pôles de laquelle sont reliées l'électrode (13) et la contre-électrode (18).

8. Eolienne selon la revendication 7, **caractérisée en ce que** le moyeu de l'éolienne est électriquement conducteur et le moyeu est connecté électriquement en tant que contre-électrode (18) par rapport à l'électrode (13), c'est-à-dire qu'il est relié électriquement à un pôle de la source de haute tension (14).

9. Eolienne selon la revendication 7, **caractérisée en ce que** la perche (11) disposée sur le moyeu est électriquement conductrice, et la perche (11) est électriquement connectée en tant que contre-électrode (18) par rapport à l'électrode (13), c'est-à-dire qu'elle est reliée électriquement à un pôle de la source de haute tension (14).

10. Eolienne selon la revendication 7, **caractérisée en ce qu'**une monture d'antenne (7) électriquement conductrice est disposée sur le moyeu, et la monture d'antenne (7) est connectée électriquement en tant que contre-électrode (18) par rapport à l'électrode (13), c'est-à-dire qu'elle est reliée électriquement à un pôle de la source de haute tension (14).

11. Eolienne selon la revendication 7, **caractérisée en ce que** l'électrode (13) est connectée en tant que cathode et de contre-électrode (18) au potentiel de masse.

12. Eolienne selon la revendication 7 à 11, **caractérisée en ce que** l'électrode (13) est réalisée comme au moins une barre dépassant de la monture d'antenne (7) ou comme au moins une aiguille dépassant de la monture d'antenne (7).

13. Eolienne selon la revendication 7 à 12, **caractérisée en ce que** l'électrode (13) présente une ou plusieurs pointes ou lames ayant un contour avec un rayon moyen rₘ, où 0,01 mm ≤ rₘ ≤ 1,2 mm, ou est réalisée sous forme de fil métallique avec un rayon moyen rₘ, où 0,1 mm ≤ rₘ ≤ 1,2 mm.

14. Eolienne selon la revendication 1 à 13, **caractérisée en ce que** les antennes de réception (12.11, 12.12, 12.21, 12.22 ... 12.N1, 12.N2) sont reliées rigidement au rotor rotatif (5), et un dispositif de détection d'angle de rotation pour détecter l'angle de rotation du rotor rotatif (5) est prévu, et le dispositif de détection d'angle de rotation est en relation fonctionnelle avec l'unité de calcul (16), et l'angle de rotation du rotor rotatif (5) entre dans le calcul de la direction du vent arrivant.

15. Eolienne selon la revendication 1 à 13, **caractérisée en ce que** les antennes de réception (12.11, 12.12, 12.21, 12.22 ... 12.N1, 12.N2) sont reliées rigidement au rotor rotatif (5), et un dispositif de détection d'au moins un point tournant avec le rotor (5) autour de l'axe de rotation (4) du rotor (5) est prévu, et le dispositif de détection du au moins un point tournant avec le rotor (5) autour de l'axe de rotation (4) du rotor (5) est en relation fonctionnelle avec l'unité de calcul (16), et les signaux de sortie du dispositif de détection d'au moins un point tournant avec le rotor (5) autour de l'axe de rotation (4) du rotor (5) entre dans le calcul de la direction du vent arrivant.
